# EUROPÄISCHE PATENTSCHRIFT

(11) **EP 4 227 156 B1**
(45) Veröffentlichungstag und Bekanntmachung des Hinweises auf die Patenterteilung: **11.02.2026**
(21) Anmeldenummer: 23401003.1
(22) Anmeldetag: 24.01.2023
(51) Int. Cl.: B60P 3/06, A01C 7/20, A01C 15/00

(54) **LANDWIRTSCHAFTLICHES TRANSPORT- UND/ODER BEARBEITUNGSSYSTEM**
AGRICULTURAL TRANSPORT AND/OR PROCESSING SYSTEM
SYSTÈME DE TRANSPORT ET/OU DE TRAITEMENT AGRICOLE

(30) Priorität: 09.02.2022 DE 102022102965
(43) Veröffentlichungstag der Anmeldung: 16.08.2023
(73) Patentinhaber: Amazonen-Werke H. Dreyer SE & Co. KG, 49205 Hasbergen (DE)
(72) Erfinder: Stein, Florian, 49078 Osnabrück (DE); Johannaber, Stefan Jan, 49536 Lienen (DE); Teckemeyer, Stephan, 49504 Lotte (DE); Hilbert, Florenz, 48282 Emsdetten (DE); Breuer, Jan Henrik, 48231 Warendorf (DE)

(56) Entgegenhaltungen:
- EP-A1- 3 683 094
- US-A- 4 296 941
- US-A1- 2013 064 632
- US-A1- 2017 336 787
- US-A1- 2019 021 220
- US-A1- 2021 212 249

## Beschreibung

Die Erfindung betrifft ein landwirtschaftliches Transport- und/oder Bearbeitungssystem gemäß dem Oberbegriff des Patentanspruches 1.

Auf dem Gebiet der Landwirtschaft sind eine Vielzahl von Varianten gezogener oder angebauter Arbeitsmaschinen bekannt. Hierzu zählen neben Bodenbearbeitungs- und/oder Pflanzenbehandlungsgeräten, wie beispielsweise Pflug- oder Hackgeräten, auch Verteilmaschinen zum Ausbringen von Verteilmaterialien auf landwirtschaftlich genutzten Flächen bzw. Nutzflächen. Je nach Art der Verteilmaterialien können dabei für granulare Verteilmaterialien wie Saatgut und/oder Dünger beispielsweise Sä- und/oder Düngermaschinen oder für flüssige Verteilmaterialien wie Pflanzenschutzmittel beispielsweise Feldspritzen eingesetzt werden. Eine derartige landwirtschaftliche Arbeitsmaschine wird während des Feldeinsatzes bzw. während des Arbeitsvorgangs in der Regel von einem Zug- und/oder Trägerfahrzeug, welches häufig als Traktor oder dergl. ausgebildet ist, entlang der Nutzfläche gezogen oder getragen. Ein solches Gespann aus Arbeitsmaschine und Zug- und/oder Trägerfahrzeug wird üblicherweise als Maschinenkombination bezeichnet.

In der modernen Landwirtschaft werden neben den von Bedienern bzw. Fahrern überwachten Maschinenkombinationen immer häufiger teil- oder vollautonom bzw. unbemannt betreibbare Maschinenkombinationen eingesetzt. Derartige Maschinenkombinationen unterscheiden sich insbesondere in ihrer Größe und/oder Arbeitsgeschwindigkeit von ebenfalls im Stand der Technik bekannten Robotersystemen nach Art von Drohnen oder dergleichen. Gattungsgemäße Maschinenkombinationen, welche insbesondere autonom betreibbar sind, können mit ihren Arbeitsbreiten, Geschwindigkeiten und/oder ihrer Arbeitsweise gegenüber bisherigen Robotersystemen weiter und/oder sogar bis zumindest nahezu an die klassisch bzw. manuell betriebenen Maschinenkombinationen heranreichen. Derartige Maschinenkombinationen sind beispielsweise in den Druckschriften US 9,891,629 B2, EP 3 057 398 B1, oder WO 2020/108713 A1 beschrieben. Darüber hinaus ist eine derartige Maschinenkombination in der Druckschrift US 2021/0212249 A1 beschrieben.

Problematisch bei derartig ausgeführten Maschinenkombination ist unter anderem, dass diese weitestgehend für den Feldeinsatz auf der Nutzfläche optimiert sind und für Transportfahrten, insbesondere für den öffentlichen Straßenverkehr, beispielsweise aus regulatorischen Gründen, ungeeignet sind. Aus diesem Grund sind derartige Maschinenkombinationen bisher auf Transportfahrzeuge bzw. Transporteinrichtungen, wie beispielsweise nach Art bekannter gezogener Anhänger, angewiesen.

Insofern ist es bereits bekannt, derartige Maschinenkombinationen auf einer Abstell- und/oder Trageplattform gattungsgemäßer Transporteinrichtungen abzustellen und/oder zu transportieren. Da derartige Transporteinrichtungen bisher üblicherweise entweder für den Transport von Zug- und/oder Trägerfahrzeug oder Arbeitsmaschinen konzipiert sind, werden diese in der Regel getrennt voneinander, insbesondere auf unterschiedlichen Transporteinrichtungen, abgestellt und/oder transportiert. Aufgrund regulatorischer bzw. gesetzlicher Vorgaben einerseits und der verhältnismäßig großen und/oder sperrigen Abmessungen derartiger Maschinenkombinationen andererseits, kann somit bisher stets nur eine Maschinenkombination mit den bisher bekannten Transporteinrichtungen transportiert werden. Da bei der Bearbeitung von Nutzflächen üblicherweise eine Mehrzahl solcher, insbesondere autonomer, Maschinenkombinationen gleichzeitig eingesetzt werden, sind die bisher bekannten Transporteinrichtungen, insbesondere aufgrund der somit notwendigen Mehrfahrten, hinsichtlich der Effizienz von Nachteil.

Derartige Transporteinrichtungen sind ferner aus den Druckschriften US 2013/0064632 A1 und US 4,296,941 A bekannt.

Darüber hinaus hat sich unter anderem auch die Bereitstellung notwendiger Betriebsmaterialien, wie etwa von Kraftstoffen oder dergleichen, während des Feldeinsatzes als problematisch herausgestellt. Auch das Vorhalten und/oder Bevorraten der auszubringenden Verteilmaterialien, welche zum Wiederbefüllen entleerter Arbeitsmaschinen vorgesehen sind, hat sich als besonders aufwendig erwiesen. Oft werden hierzu separate Befüllfahrzeuge und/oder Befüllvorrichtungen eingesetzt, was sich ebenfalls negativ auf die Effizienz derartig betriebener Maschinenkombinationen und/oder Transporteinrichtungen auswirkt. Zwar ist aus der Druckschrift US 2017/0336787 A1 eine Transporteinrichtung zur Bereitstellung von Betriebsmaterialien bekannt, jedoch ist diese für den Einsatz mit gattungsgemäßen Maschinenkombinationen ungeeignet.

Aus der Druckschrift US 2019/0021220 A1 ist ein landwirtschaftliches Transport- und/oder Bearbeitungssystem bekannt geworden, welches eine Transporteinrichtung mit einer Abstell- und/oder Trageplattform zur Aufnahme einer gattungsgemäßen Maschinenkombination umfasst. Dabei ist vorgesehen, die Maschinenkombination zum Transportieren anzuheben. Nachteilig ist dabei jedoch der benötigte Platzbedarf zum Abstellen der Maschinenkombination während des Transports bzw. in Transportstellung.

Die der Erfindung zugrunde liegende Aufgabe besteht somit darin, die beschriebenen Nachteile zumindest teilweise zu beheben. Insbesondere besteht die Aufgabe darin, eine Transporteinrichtung und/oder eine Maschinenkombination bereitzustellen, welche die Effizienz beim Einsatz und/oder Transport von, vorzugsweise autonom betreibbaren, Maschinenkombinationen noch weiter verbessert. Ferner soll vorzugsweise ein landwirtschaftliches Transport- und/oder Bearbeitungssystem bereitgestellt werden, welches besonders effizient und umweltschonend betreibbar ist.

Diese Aufgabe wird erfindungsgemäß durch die kennzeichnenden Merkmale des Anspruch 1 gelöst.

Zusätzlich kann für die Transporteinrichtung eine Haltevorrichtung vorgesehen sein, mittels welcher wenigstens eine auf der Abstell- und/oder Trageplattform abstellbare Maschinenkombination zumindest teilweise aus einer abgestellten Ausgangsstellung in eine derart gegenüber der Abstell- und/oder Trageplattform angestellten Transportstellung verstellbar ist, dass mehrere Maschinenkombinationen ineinander passend, insbesondere übereinander ragend, auf der Transporteinrichtung abstellbar sind.

In Folge dieser Maßnahme sind mehrere, vorzugsweise zumindest zwei, Maschinenkombinationen gleichzeitig auf der Transporteinrichtung transportierbar. Die Erfindung macht sich hierbei insbesondere ein Verschachtelungsprinzip zunutze, welches es erlaubt, miteinander zu transportierende Maschinenkombinationen in besonders kompakter Weise aneinander und dabei auf der Abstell- und/oder Trageplattform abzustellen. Somit ist beispielsweise eine geringere Anzahl an Fahrten zwischen den Betrieben und dem jeweiligen Einsatzort der Maschinenkombinationen erreicht, womit die erfindungsgemäße Ausführungsform einen besonders effizienten und/oder umweltschonenden Transport und/oder Betrieb derartiger Maschinenkombinationen erlaubt. Mit anderen Worten ist damit außerdem ermöglicht, dass der Betreiber und/oder Landwirt derartige, insbesondere kompakt aufbauende, Maschinenkombinationen mit höherer Schlagkraft betreiben und/oder einsetzen kann.

Die Transporteinrichtung ist dabei ferner bevorzugt zumindest teilweise nach Art an sich bekannter Plattformanhänger ausgebildet, wobei die Abstell- und/oder Trageplattform mit anderen Worten die Ladefläche zum Abstellen der zu transportierenden Maschinenkombinationen bildet. Alternativ oder zusätzlich hierzu kann die Transporteinrichtung auch zumindest teilweise nach Art eines Tiefbettanhängers ausgebildet sein.

Weiterhin ist hierbei bevorzugt, dass die wenigstens eine Haltevorrichtung, insbesondere beweglich und/oder schwenkbar, innerhalb der Transporteinrichtung angeordnet ist. Die zumindest eine Haltevorrichtung kann dabei besonders bevorzugt mit der Abstell- und/oder Trageplattform verbunden und/oder in diese eingebettet sein. Alternativ oder zusätzlich kann die Haltevorrichtung auch nach Art einer in die Abstell- und/oder Trageplattform (bzw. in den Boden) eingebetteten Aufnahme ausgebildet sein, welche beispielsweise röhrförmig oder dergl. ausgeführt, und zum Einhängen und/oder Einhaken wenigstens einer der Maschinenkombinationen vorgesehen sein kann.

Für den Transport ist wenigstens eine der Maschinenkombinationen mit der Haltevorrichtung koppelbar und/oder verbindbar.

Mittels der wenigstens einen Haltevorrichtung ist bevorzugt wenigstens eine der Maschinenkombinationen derart auf der Abstell- und/oder Trageplattform verstellbar, dass zumindest ein Teil und/oder Abschnitt, insbesondere ein vorderer Bereich, der Maschinenkombination zumindest im Wesentlichen auf und/oder an der Abstell- und/oder Trageplattform verbleibt, während ein anderer Teil und/oder Abschnitt, insbesondere ein hinterer Bereich, der Maschinenkombination in vertikaler, vorzugsweise schräg nach oben weisender, Richtung verstellbar und/oder anhebbar ist. Die wenigstens eine Haltevorrichtung ist hierbei besonders bevorzugt dazu eingerichtet, wenigstens eine der Maschinenkombinationen derart zu verstellen und/oder anzuheben, dass die Maschinenkombination zumindest teilweise seitlich und/oder oberhalb an der wenigstens einen anderen Maschinenkombination vorbei ragt. Weiterhin ist vorgesehen, dass die Maschinenkombinationen in Transportstellung und in Fahrtrichtung gesehen hintereinander auf der Abstell- und/oder Trageplattform platziert sind, womit eine besonders schlanke bzw. schmale Ausführungsform der Transporteinrichtung erreicht ist.

In einer bevorzugten Ausführungsform der erfindungsgemäßen Transporteinrichtung ist die Haltevorrichtung mittels wenigstens einem zugeordneten Stellantrieb dazu eingerichtet, wenigstens eine der auf der Abstell- und/oder Trageplattform abstellbaren Maschinenkombinationen zumindest teilweise aus der abgestellten, insbesondere etwa horizontal weisenden, Ausgangsstellung in die zumindest teilweise angehobene, insbesondere etwa vertikal und/oder schräg nach oben weisende Transportstellung anzuheben. Hierbei ist die wenigstens eine Haltevorrichtung vorzugsweise zumindest teilweise als Stellantrieb ausgebildet. Alternativ oder zusätzlich kann der Haltevorrichtung auch zumindest ein Stellantrieb zugeordnet und/oder mit der Haltevorrichtung gekoppelt sein. Der Stellantrieb ist vorzugsweise als fernbetätigter, bspw. hydraulischer, pneumatischer und/oder elektrischer, Stellzylinder ausgeführt, wobei auch andere Stellantriebe, insbesondere Drehantriebe, denkbar wären. Besonders bevorzugt ist dabei vorgesehen, dass der zumindest eine Stellantrieb unmittelbar mit wenigstens einer der Maschinenkombinationen, vorzugsweise einem Rahmen der Maschinenkombination verbindbar ist. Somit ist erreicht, dass die Stellkraft zum Verstellen der Maschinenkombinationen in direkter Weise in die jeweilige Maschinenkombination einleitbar ist, womit eine besonders einfach ausgeführte Transporteinrichtung erreicht ist. Insbesondere ist dadurch ebenfalls erreicht, dass ausschließlich die jeweilige Maschinenkombination mittels des Stellantriebes angehoben werden muss, was für die Dimensionierung derartiger Stellantriebe besonders vorteilhaft ist.

In einer Weiterbildung der erfindungsgemäßen Transporteinrichtung umfasst die Transporteinrichtung mehrere Haltevorrichtungen, wobei jeder auf der Transporteinrichtung abstellbaren Maschinenkombinationen jeweils wenigstens eine Haltevorrichtung zugeordnet ist, und wobei jede der mehreren abstellbaren Maschinenkombinationen mittels der Haltevorrichtungen verstellbar, insbesondere anhebbar, sind. Bevorzugt ist hierbei wenigstens eine erste Haltevorrichtung, welche mit einer der Maschinenkombinationen verbindbar ist, und wenigstens eine zweite Haltevorrichtung, welche mit der wenigstens einen anderen Maschinenkombination verbindbar ist. Die abgestellten Maschinenkombinationen sind hierbei zumindest in etwa in gleicher, insbesondere vertikal und/oder schräg nach oben weisender, Richtung auf der Transporteinrichtung platzierbar. Somit kann ein, insbesondere gesetzlich, vorgegebener Transportraum der Transporteinrichtung in besonders kompakt abstellbarer Weise genutzt werden.

In einer anderen bevorzugten Ausführungsform der erfindungsgemäßen Transporteinrichtung ist die Haltevorrichtung form- und/oder kraftschlüssig mit wenigstens einer der abstellbaren Maschinenkombinationen, insbesondere mit einem dem Zug- und/oder Trägerfahrzeug zugeordneten Rahmen, verbindbar. Eine Verbindung zwischen wenigstens einer der Maschinenkombinationen und der wenigstens einen Haltevorrichtung kann beispielsweise nach Art an sich bekannter Schnellkupplungen ausgebildet sein. Die Haltevorrichtung kann ferner bevorzugt auch zum Ausbilden einer Transportsicherung für die damit verbundene Maschinenkombination ausgeführt sein. Darüber hinaus wäre es auch denkbar, dass die Verbindung nach dem Prinzip einer Fangtasche und/oder einem Fanghaken, wie beispielsweise an Unterlenkern landwirtschaftlicher Schlepper bereits bekannt, ausgeführt ist.

Um eine besonders hohe Einsatzzeit bei der Bearbeitung einer landwirtschaftlichen Nutzfläche mit derartig betriebenen und/oder ausgeführten Maschinenkombinationen zu erreichen, ist für die Transporteinrichtung wenigstens ein zum Vorhalten von Betriebs- und/oder Verteilmaterialien vorgesehenes Vorratsmodul bevorzugt. Das Vorratsmodul ist während des Transports und/oder des Betriebs der Maschinenkombinationen an der Transporteinrichtung, insbesondere in auswechselbarer Weise, angeordnet. Die in dem Vorratsmodul vorgehaltenen Betriebs- und/oder Verteilmaterialien sind zum Betreiben wenigstens einer der Maschinenkombination und/oder zum Aufbringen auf die landwirtschaftliche Nutzfläche vorgesehen. Das Betriebsmaterial kann zum Betrieb der Maschinenkombinationen notwendig sein und beispielsweise als Hydraulik-Öl, Druckluft, Treibstoff, Schmierstoff oder dergleichen ausgeführt sein. Das Verteilmaterial kann zum Verteilen und/oder zum Aufbringen auf der Nutzfläche und/oder einem darauf sich befindlichem Pflanzenbestand vorgesehen sein und beispielsweise als granulares Saatgut, Düngemittel oder als flüssiges Pflanzenschutz-, Dünger- und/oder Unkraut- bzw. Schädlingsbekämpfungsmittel ausgeführt sein. Das Vorratsmodul kann dabei zumindest im Wesentlich aus wenigstens einem Behälter ausgebildet sein. Alternativ oder zusätzlich kann das Vorratsmodul auch mehrere Behälter und/oder mehrere Kammern innerhalb des wenigstens einen Behälters umfassen, wobei die mehreren Behälter und/oder Kammern für unterschiedliche Sorten und/oder Konzentrate der Betriebs- und/oder Verteilmaterialien vorgesehen sein können. Eine derartige Ausführungsform der Transporteinrichtung erlaubt es derartige Maschinenkombinationen besonders effizient zu betreiben. Weiterhin zeichnet sich eine derartige Ausführungsform durch den besonders geringen Platzbedarf entlang der Nutzfläche, insbesondere am Feldrand, aus.

Darüber hinaus kann das Vorratsmodul alternativ oder zusätzlich austauschbare, insbesondere befüllte, Behälter und/oder Energiespeicher, wie beispielsweise zusätzliche Vorratsbehälter und/oder Akkus, umfassen, welche zum Übergeben und/oder in austauschbarer Weise für die Maschinenkombinationen vorgesehen sind. Mit anderen Worten kann vorgesehen sein, dass Behältnisse und/oder Speicher, wie beispielsweise Vorratsbehälter und/oder Akkus, zum Versorgen der Maschinenkombinationen zwischen der Transporteinrichtung und den Maschinenkombinationen austauschbar sind.

In einer anderen Weiterbildung der erfindungsgemäßen Transporteinrichtung ist eine Kopplungsvorrichtung vorgesehen, mittels welcher das Vorratsmodul in austauschbarer Weise, insbesondere nach Art einer Wechselbrücke bzw. eines Wechselbehälters, an der Transporteinrichtung anbringbar ist. Die Kopplungsvorrichtung ist hierbei vorzugsweise zumindest teilweise an der Transporteinrichtung oder besonders bevorzugt an einem Rahmen der Transporteinrichtung angeordnet. Alternativ oder zusätzlich kann die Kopplungsvorrichtung auch zumindest teilweise an dem einen oder den mehreren Vorratsmodulen, insbesondere auswechselbaren Behältern, angeordnet sein. Des Weiteren kann alternativ oder zusätzlich auch wenigstens ein dem Vorratsmodul zugeordneter, insbesondere zwischen Vorratsmodul und Transporteinrichtung angeordneter, Hilfs- bzw. Wechselrahmen vorgesehen sein, der in austauschbarer Weise mit der Transporteinrichtung koppelbar ist. Darüber hinaus wäre alternativ oder zusätzlich denkbar, dass die Kopplungsvorrichtung zumindest teilweise nach Art an sich bekannter Twist Lock-Systeme, wie beispielsweise an ISO-Containern, ausgebildet ist. Mittels einer derartig ausgeführten Transporteinrichtung, kann das Vorratsmodul in besonders einfacher und/oder schneller Weise ausgetauscht werden.

In einer weiteren bevorzugten Ausführungsform der erfindungsgemäßen Transporteinrichtung ist ein höhenverstellbares Fahrwerk vorgesehen, welches dazu eingerichtet ist, eine, insbesondere heckseitige, Höhe und/oder Lage der Transporteinrichtung zu beeinflussen, und mittels dem das Vorratsmodul, insbesondere nach Art einer Wechselbrücke, von der Transporteinrichtung in eine dafür vorgesehene, insbesondere externe, Aufnahme- und/oder Abstellvorrichtung abstellbar ist. Das Fahrwerk umfasst bevorzugt wenigstens eine Fahrwerksachse, welche mit einem oder mehreren Fahrwerksrädern und/oder einer Fahrwerksaufhängung der Transporteinrichtung verbunden ist. Das Fahrwerk ist dabei besonders bevorzugt im hinteren Bereich, insbesondere am Heck, der Transporteinrichtung angeordnet. Insbesondere ist hierbei vorgesehen, dass das Fahrwerk zum Lösen und/oder Abstellen des Vorratsmoduls dazu eingerichtet ist, den hinteren Bereich, insbesondere das Heck, der Transporteinrichtung abzusenken. Anders herum ist hierbei ferner vorgesehen, dass das Fahrwerk zum Einhängen und/oder Aufnehmen des Vorratsmoduls dazu eingerichtet ist, den hinteren Bereich, insbesondere das Heck, der Transporteinrichtung anzuheben. Das Absenken und/oder Anheben der Transporteinrichtung erfolgt dabei vorzugsweise während die Transporteinrichtung zumindest teilweise in die externe Aufnahme- und/oder Abstellvorrichtung des Vorratsmoduls hineinragt. Eine derartige Ausführungsform erlaubt das Austauschen des Vorratsmoduls zumindest nahezu ohne Fremdhilfe bzw. ohne zusätzliche externe Hebevorrichtungen.

In einer weiteren Weiterbildung der erfindungsgemäßen Transporteinrichtung ist ein höhenverstellbares Fahrwerk vorgesehen, welches dazu eingerichtet ist, eine Neigung und/oder Höhe der Transporteinrichtung zum Be- und/oder Entladen der Maschinenkombinationen in Abhängigkeit der Topografie einer Abstellfläche im Bereich der Transporteinrichtung anzupassen. Die Abstellfläche bildet dabei den Bereich der Nutzfläche innerhalb dem die Transporteinrichtung während dem Betrieb der Maschinenkombinationen bzw. während der Bearbeitung der Nutzfläche platziert ist. Vorzugsweise kann es sich hierbei um eine Abstellfläche in einem Randbereich und/oder im Nahbereich der zu bearbeitenden Nutzfläche handeln. Die Transporteinrichtung, insbesondere die Abstell- und/oder Trageplattform, ist hierbei mittels des Fahrwerks auf die Abstellfläche und damit auf den Boden absenkbar und/oder abstellbar. Weiterhin kann dabei vorgesehen sein, dass das Fahrwerk dazu eingerichtet ist, die Neigung der Transporteinrichtung, insbesondere der Abstell- und/oder Trageplattform, um eine zumindest im Wesentlichen horizontale Längs- oder Querachse der Transporteinrichtung zu verstellen bzw. einzustellen. Hiermit können zum Verladen und/oder zum Versorgen der Maschinenkombinationen beispielsweise unebene Böden und/oder ein Hang in der Abstellfläche zumindest teilweise ausgeglichen werden. Alternativ oder zusätzlich wären auch betätigbare und/oder ausfahrbare Stützelemente an der Transporteinrichtung denkbar, welche insbesondere dazu eingerichtet sind, die Standsicherheit der Transporteinrichtung zu erhöhen und/oder Unebenheiten auszugleichen. Somit ist eine Transporteinrichtung mit besonders hohe Standsicherheit erreicht, welche besonders einfach mittels der Maschinenkombinationen befahrbar ist. Weiterhin ist damit auch die Prozesssicherheit beim Versorgen, insbesondere Befüllen, der Maschinenkombinationen gesteigert.

Darüber hinaus ist eine erfindungsgemäße Transporteinrichtung bevorzugt, bei der die Abstell- und/oder Trageplattform zumindest teilweise nach Art einer Sammel- und/oder Auffangvorrichtung zum Auffangen von Betriebs- und/oder Verteilmaterialien ausgebildet ist. Alternativ oder zusätzlich kann der Transporteinrichtung auch wenigstens eine derartige Sammel- und/oder Auffangvorrichtung zugeordnet sein, welche dabei vorzugsweise unterhalb oder an der Abstell- und/oder Trageplattform angeordnet ist. Die Sammel- und/oder Auffangvorrichtung kann hierbei beispielsweise nach Art einer Auffangwanne ausgeführt sein. Ferner kann das gesammelte und/oder aufgefangene Betriebs- und/oder Verteilmaterial alternativ oder zusätzlich zurück zum Vorratsmodul und/oder zu einem der Transporteinrichtung zugeordneten Entsorgungsbehälter zuleitbar und/oder förderbar sein. Darüber hinaus kann der Abstell- und/oder Trageplattform hierbei wenigstens eine Sensoreinrichtung zugeordnet sein, welche dazu eingerichtet ist, die von der Abstell- und/oder Trageplattform, insbesondere der Sammel- und/oder Auffangvorrichtung, aufgefangenen Betriebs- und/oder Verteilmaterialien, vorzugsweise nach Art einer Füllstandsüberwachung, zu erfassen. Alternativ oder zusätzlich zur Sensoreinrichtung kann vorgesehen sein, dass sowohl der zu versorgenden Maschinenkombination als auch dem Vorratsmodul jeweils eine Füllstandssensorik zugeordnet ist, welche besonders bevorzugt während der Versorgung, insbesondere dem Befüllen, der Maschinenkombination mittels einem zugeordneten Steuer- und/oder Regelsystems miteinander abgleichbar bzw. vergleichbar sind. Eine derartige Ausführungsform erlaubt einen besonders betriebssicheren und/oder umweltschonenden Betrieb der Maschinenkombination und/oder der Transporteinrichtung, bei der eine Verschüttung von Betriebs- und/oder Verteilmaterialien auf die Nutzfläche zumindest nahezu ausgeschlossen ist.

In einer anderen bevorzugten Ausführungsform der erfindungsgemäßen Transporteinrichtung ist eine an einer Stirnseite der Transporteinrichtung angeordnete verstellbare und/oder abnehmbare, insbesondere nach Art einer Deichsel ausgebildete, Zugvorrichtung vorgesehen, mittels der die Transporteinrichtung mit einem Schlepper koppelbar ist. Die Zugvorrichtung ist hierbei derart verstellbar und/oder abnehmbar, dass die Abstell- und/oder Trageplattform über die Stirnseite, und insbesondere oberhalb der Zugvorrichtung, von den Maschinenkombinationen befahrbar ist. Die Zugvorrichtung ist hierbei besonders bevorzugt absenkbar und/oder anhebbar gegenüber der Abstell- und/oder Trageplattform ausgebildet.

In einer alternativen Ausführungsform wäre auch denkbar, dass die Zugvorrichtung derart ausgebildet ist, dass die Bodenfreiheit der zu transportierenden und/oder zu verladenden Maschinenkombinationen berücksichtigt und/oder ausgenutzt wird. Die Zugvorrichtung kann hierzu besonders flach, insbesondere auf einem Höhenniveau der Abstell- und/oder Trageplattform, ausgebildet sein, sodass eine Überfahrt der Maschinenkombination oberhalb der, vorzugsweise fest fixierten, Zugvorrichtung ermöglicht ist.

Bei einer weiteren ebenfalls bevorzugten Ausführungsform der erfindungsgemäßen Transporteinrichtung kann die Abstell- und/oder Trageplattform alternativ oder zusätzlich von der Seite bzw. seitlich von den Maschinenkombinationen befahrbar sein. Hierbei kann zusätzlich auch wenigstens eine, insbesondere an der Transporteinrichtung angeordnete, Auffahrhilfe vorgesehen sein, welche beispielsweise nach Art von Auffahrkeilen ausgebildet sein kann.

Bei einer besonders bevorzugten Ausführungsform der erfindungsgemäßen Transporteinrichtung ist ein, insbesondere nach Art eines Energiespeichers ausgebildetes, Versorgungsmodul vorgesehen, welches an der Transporteinrichtung, vorzugsweise unterhalb des Vorratsmoduls, angeordnet ist, und welches dazu eingerichtet ist, die Transporteinrichtung und/oder wenigstens eine Maschinenkombination mit elektrischer, hydraulischer und/oder mechanischer Energie zu versorgen und/oder zu betreiben. Das Versorgungsmodul ist ferner dazu eingerichtet, die Transporteinrichtung, insbesondere wenigstens einen Stellantrieb, mit der jeweils notwendigen Energie zu versorgen und/oder zu betreiben. Das Versorgungsmodul ist hierbei vorzugsweise im Bereich, insbesondere zwischen und/oder oberhalb, des Fahrwerks angeordnet. Weiterhin kann das Versorgungsmodul alternativ oder zusätzlich in einem dem Versorgungsmodul zugeordneten Hilfs- bzw. Wechselrahmen, welcher mit der Transporteinrichtung koppelbar ist, eingebettet sein. Das Versorgungsmodul kann beispielsweise wenigstens einen Speicher umfassen, welcher dazu eingerichtet ist, elektrischen Strom und/oder flüssige Materialien für den Betrieb der Transporteinrichtung und/oder der Maschinenkombinationen vorzuhalten.

In einer besonders bevorzugten Weiterbildung der erfindungsgemäßen Transporteinrichtung ist eine an der Transporteinrichtung, insbesondere am Vorrats- und/oder Versorgungsmodul, angeordnete erste Schnittstelle vorgesehen, welche in elektrisch leitender Weise mit einer an wenigstens einer Maschinenkombination angeordneten zweiten Schnittstelle verbindbar ist. Das Versorgungsmodul ist hierbei über die jeweiligen Schnittstellen wiederaufladbar ausgebildet. Die Schnittstellen der Transporteinrichtung und/oder der Maschinenkombinationen sind besonders bevorzugt bidirektional ausgebildet und sowohl zum Einleiten als auch zum Ausleiten von Energie geeignet und/oder vorgesehen.

Bei einer weiteren besonders bevorzugten Ausführungsform der erfindungsgemäßen Transporteinrichtung ist eine Erfassungs- und/oder Auswertevorrichtung vorgesehen, welche dazu eingerichtet ist, eine auf der Abstell- und/oder Trageplattform abstellbare Maschinenkombination in einer dafür vorgesehenen Soll-Abstellposition zu erfassen und/oder zu ermitteln. Weiterhin ist dabei ein der Transporteinrichtung zugeordnetes Steuer- und/oder Regelsystem vorgesehen, welches dazu eingerichtet ist, das Vorratsmodul und/oder das Versorgungsmodul in Abhängigkeit der erfassten und/oder ermittelten Maschinenkombination anzusteuern. Das Steuer- und/oder Regelsystem ist hierbei vorzugsweise dazu eingerichtet, einen Befüllvorgang der Maschinenkombination aus dem Vorrats- und/oder Versorgungsmodul freizugeben, sobald die jeweilige Maschinenkombination in der vorgegebenen Soll-Position auf der Transporteinrichtung erfasst und/oder erkannt wird. Die Erfassungs- und/oder Auswertevorrichtung kann beispielsweise nach Art eines berührungsfrei erfassenden Sensors bzw. einer Kamera oder dergleichen ausgebildeten sein. Alternativ oder zusätzlich kann die Erfassungs- und/oder Auswertevorrichtung auch ein, insbesondere der Abstell- und/oder Trageplattform zugeordnetes, Wiegemesssystem umfassen.

In einer weiteren besonders bevorzugten Weiterbildung der erfindungsgemäßen Transporteinrichtung ist ein der Erfassungs- und/oder Auswertevorrichtung zugeordneter erster Positions- und/oder Lagegeber vorgesehen, mittels dem die Erfassungs- und/oder Auswertevorrichtung dazu eingerichtet ist, eine Position und/oder Lage der Transporteinrichtung, insbesondere der Soll-Abstellposition, in georeferenzierter Weise zu bestimmen. Das Steuer- und/oder Regelsystem ist hierbei dazu eingerichtet, die Position und/oder Lage der Transporteinrichtung, insbesondere die georeferenzierte Soll-Abstellposition, mit einer Position und/oder Lage, insbesondere einer georeferenzierten Ist-Position, der Maschinenkombination, welche mittels einem der Maschinenkombination zugeordneten zweiten Positions- und/oder Lagegeber bestimmbar ist, abzugleichen. Die Positions- und/oder Lagegeber sind hierbei bevorzugt satellitengestützt, beispielsweise nach Art von GPS-Antennen, ausgeführt. Die Transporteinrichtung und/oder die Maschinenkombinationen können hierbei auch jeweils mehrere, insbesondere versetzt zueinander angeordnete, Positions- und/oder Lagegeber umfassen, mittels denen neben der Position zusätzlich auch die Ausrichtung, beispielsweise in Bezug zu den Himmelsrichtungen und/oder zu einem globalen Koordinatensystem, erfassbar und/oder bestimmbar ist. Weiterhin kann wenigstens einer der Positions- und/oder Lagegeber Teil eines RTK-GPS-Systems sein, mittels dem die Positionen und/oder Ausrichtungen der Transporteinrichtung und/oder der Maschinenkombinationen besonders genau bestimmbar sind. Der Positionsgeber der Transporteinrichtung ist hierbei ferner bevorzugt als GPS-Basis-Station ausgeführt. Alternativ oder zusätzlich kann auch wenigstens ein zusätzlicher am Feldrand positionierter Positionsgeber als GPS-Basis-Station ausgeführt sein. Eine derartig präzise Erfassung der Positionen und/oder Ausrichtungen ermöglicht ein automatisiertes Befahren der Transporteinrichtung durch die zu verladenden und/oder zu versorgenden Maschinenkombinationen.

Alternativ oder zusätzlich wären auch an der Transporteinrichtung ausgebildete Markierungs- und/oder Leitelemente denkbar. Derartige Markierungs- und/oder Leitelemente können, beispielsweise optisch, von den Maschinenkombinationen erfassbar und zum, insbesondere autonomen, Befahren der Transporteinrichtung vorgesehen sein. Durch eine derartige Ausführungsform kann die Sicherheit des Befahr- und/oder Verladungsvorgangs noch weiter gesteigert werden.

Bei einer weiteren vorteilhaften Ausführungsform der erfindungsgemäßen Transporteinrichtung ist ein dem Vorratsmodul zugeordnetes Förderorgan vorgesehen, welches zum Befüllen der abstellbaren Maschinenkombination vorgesehen ist, und welches in Abhängigkeit der erfassten und/oder ermittelten Maschinenkombination einstellbar und/oder anpassbar ist. Das Förderorgan kann beispielsweise als Transportband, Förderschnecke oder dergl. ausgebildet sein, welches dazu eingerichtet ist, im Vorratsmodul vorgehaltene Betriebs- und/oder Verteilmaterialien aus dem Vorratsmodul in die Maschinenkombinationen, insbesondere einen Vorratsbehälter der Maschinenkombinationen, umzufüllen. Insbesondere ist dabei vorgesehen, dass das Förderorgan automatisch anhand der Maschinenkombination, vorzugsweise anhand der Position und/oder Ausrichtung der zu befüllenden Maschinenkombination, ausgerichtet bzw. positioniert wird. Hierbei kann weiterhin vorgesehen sein, dass die umzufüllende Menge für eine Maschinenkombination alternativ oder zusätzlich fest vorgebbar ist oder anhand der jeweiligen Füllstandssensorik des Vorratsmoduls und/oder der Maschinenkombinationen steuerbar und/oder regelbar ist. Das Vorratsmodul ist mittels dem wenigstens einen Förderorgan vorzugsweise dazu eingerichtet, verschiedene Materialien aus unterschiedlichen Behältern und/oder Kammern des Vorratsmoduls in die zugehörigen Behälter und/oder Kammern der jeweiligen Maschinenkombinationen zu fördern. Ferner kann hierfür zusätzlich die Position und/oder Lage des Vorratsbehälters auf der Maschinenkombination erfassbar und/oder bestimmbar sein. Weiterhin kann alternativ oder zusätzlich auch eine Behälteröffnung des zu befüllenden Vorratsbehälters erfassbar sein, welche beim Ausrichten des wenigstens einen Förderorgans berücksichtigbar ist. Alternativ oder zusätzlich hierzu kann auch der Öffnungszustand der Behälteröffnung erfassbar und berücksichtigbar sein.

Darüber hinaus ist für die Transporteinrichtung wenigstens ein Erfassungssystem denkbar, welches dazu eingerichtet ist, Hindernisse, Personen oder dergleichen innerhalb des Arbeitsbereichs und/oder im Nah- bzw. Gefahrbereich zu erfassen. Die Transporteinrichtung kann mittels dem Erfassungssystem insbesondere dazu eingerichtet sein, den Betrieb in Abhängigkeit der erfassbaren Hindernisse, Personen oder dergleichen zu sperren und/oder freizugeben.

Die der Erfindung zugrunde liegende Aufgabe wird ferner durch eine Maschinenkombination der eingangs genannten Art gelöst, wobei die erfindungsgemäße Maschinenkombination, insbesondere die Arbeitsmaschine, zumindest teilweise aus einer abgestellten, insbesondere abgesenkten, Ausgangsstellung in eine, vorzugsweise gegenüber dem Zug- und/oder Trägerfahrzeug, angestellte, insbesondere angehobene, Transportstellung verstellbar ist.

Des Weiteren ist hierbei eine Maschinenkombination besonders bevorzugt, bei der die Arbeitsmaschine in unterschiedlichen Stellungen gegenüber dem Zug- und/oder Trägerfahrzeug verstellbar und/oder verbringbar ist. Insbesondere sind hierbei eine auf den Boden abgesenkte Arbeitsstellung und eine gegenüber Zug- und/oder Trägerfahrzeug angehobene Transportstellung für die Arbeitsmaschine vorgesehen. Alternativ oder zusätzlich kann auch eine zumindest teilweise angehobene Stellung für Randbereiche und/oder ein Vorgewende der Nutzfläche vorgesehen sein.

Die Maschinenkombination ist erfindungsgemäß nach Art eines landwirtschaftlichen Maschinengespanns, bestehend aus einer landwirtschaftlichen Arbeitsmaschine und einem Zug- und/oder Trägerfahrzeug, ausgebildet. Die Arbeitsbreite der Maschinenkombination ist zumindest in etwa zwischen der eines autonomen Robotiksystems wie etwa Drohnen oder dergl. und eines klassischen bzw. manuell betreibbaren Maschinengespanns bzw. Maschinenkombination ausgebildet. Bevorzugt weist die Maschinenkombination eine Arbeitsbreite von etwa 2 m bis 10 m auf, und besonders bevorzugt zwischen etwa 3 m bis 6 m. Somit ist eine, insbesondere autonom betreibbare,

Maschinenkombination geschaffen, welche eine Arbeitsgeschwindigkeit aufweist, die zumindest in etwa der einer klassischen Maschinenkombination entspricht.

In einer bevorzugten Ausführungsform der erfindungsgemäßen Maschinenkombination ist das Zug- und/oder Trägerfahrzeug derart ausgebildet und/oder absenkbar, dass die Maschinenkombination ineinander passend mit einer anderen, insbesondere zweiten, Maschinenkombination, vorzugsweise von der anderen oder zweiten Maschinenkombination überragend, abstellbar. Das Zug- und/oder Trägerfahrzeug der Maschinenkombination ist hierbei bevorzugt gegenüber einem am Zug- und/oder Trägerfahrzeug angeordneten Fahrwerk, insbesondere um eine Querachse und/oder eine Fahrwerksachse, verdrehbar ausgebildet, so dass das Zug- und/oder Trägerfahrzeug gegenüber dem Fahrwerk anstellbar ist. Das Zug- und/oder Trägerfahrzeug ist hierbei besonders bevorzugt derart gegenüber dem Fahrwerk verdrehbar, dass das Zug- und/oder Trägerfahrzeug im vorderen Bereich, vorzugsweise einer der Arbeitsmaschine abgewandten Seite, in Richtung des Bodens, insbesondere der Abstell- und/oder Trageplattform, absenkbar und im hinteren Bereich, vorzugsweise einer der Arbeitsmaschine zugewandten Seite anhebbar ist. Das Zug- und/oder Trägerfahrzeug ist vorzugsweise derart ausgebildet und/oder absenkbar, dass in der Transportstellung oberhalb des Zug- und/oder Trägerfahrzeugs und/oder zwischen dem Zug- und/oder Trägerfahrzeug und der, insbesondere angehobenen, Arbeitsmaschine ein von der Seite gesehen zumindest in etwa L-förmiger Transportraum gebildet ist, in den die andere, insbesondere zweite, Maschinenkombination zumindest teilweise hineinschiebbar und/oder positionierbar ist.

Bei der erfindungsgemäßen Maschinenkombination ist wenigstens eine Hebeeinrichtung vorgesehen, welche dazu eingerichtet ist, die Arbeitsmaschine zumindest teilweise anzuheben. Die Hebeeinrichtung ist hierbei bevorzugt an der Maschinenkombination, insbesondere an dem Zug- und/oder Trägerfahrzeug, angeordnet. Zusätzlich kann an einer zugeordneten Transporteinrichtung eine, insbesondere nach Art einer Aufnahme ausgebildete, Haltevorrichtung vorgesehen sein, mit der die Hebeeinrichtung der Maschinenkombination verbindbar ist, und mittels der die Hebeeinrichtung dazu eingerichtet ist, die Maschinenkombination, insbesondere einen hinteren Teil der Maschinenkombination und/oder die Arbeitsmaschine, anzuheben. Alternativ oder zusätzlich kann die Hebeeinrichtung auch mit einer an einer anderen Maschinenkombination angeordneten Aufnahme, insbesondere Rahmen, verbindbar und dazu eingerichtet sein, die andere Maschinenkombination, insbesondere die andere Arbeitsmaschine zumindest teilweise anzuheben.

In einer anderen bevorzugten Ausführungsform der erfindungsgemäßen Maschinenkombination ist die Maschinenkombination, insbesondere das Zug- und/oder Trägerfahrzeug, zum Verstellen in die Transportstellung längenveränderlich ausgebildet. Hierbei ist die Maschinenkombination, insbesondere das Zug- und/oder Trägerfahrzeug, für eine Vorgewende- und/oder Arbeitsstellung bevorzugt verlängerbar bzw. in einem ausgefahrenen Betriebszustand betreibbar. Dies erlaubt eine besonders großen Lenkwinkel zwischen Zug- und/oder Trägerfahrzeug und der Arbeitsmaschine, womit die Manövrierbarkeit der Maschinenkombination während des Arbeitsvorgangs verbessert ist. Die Maschinenkombination ist ferner bevorzugt dazu eingerichtet, sich, insbesondere das Zug- und/oder Trägerfahrzeug, für die Transportstellung zumindest teilweise zu verkürzen. Hierdurch kann das Zug- und/oder Trägerfahrzeug und die Arbeitsmaschine für die Transportstellung aneinander geschoben werden, womit die Maschinenkombination zum Abstellen auf einer zugeordneten Transporteinrichtung in besonders kompakter Weise platzierbar ist. In einer anderen Weiterbildung der erfindungsgemäßen Maschinenkombination weist das Zug- und/oder Trägerfahrzeug wenigstens einen vorderen und hinteren Fahrzeugteil auf, welche vorzugsweise horizontal schwenkbar und/oder besonders bevorzugt mittels eines Knickgelenks miteinander verbunden sind, und welche zum Ändern einer Länge der Maschinenkombination, insbesondere des Zug- und/oder Trägerfahrzeugs, translatorisch und/oder in Fahrtrichtung zueinander verschiebbar sind. Die Maschinenkombination, insbesondere das Zug- und/oder Trägerfahrzeug, weist hierbei bevorzugt eine Teleskopmechanik auf, welche besonders bevorzugt zwischen dem vorderen und hinteren Fahrzeugteil angeordnet ist. Die Teleskopmechanik ist bevorzugt aus mehreren ineinanderschiebbaren und/oder auseinanderziehbare Trag- und/oder Rahmenrohren ausgebildet. Der vordere Fahrzeugteil weist neben wenigstens einem Fahrwerk außerdem bevorzugt wenigstens eine Antriebseinheit zum Antreiben der Maschinenkombination auf. Der hintere Fahrzeugteil ist von dem vorderen Fahrzeugteil ziehbar und vorzugsweise nach Art eines Unterwagens ausgebildet, auf dem die Arbeitsmaschine der Maschinenkombination platzierbar und/oder befestigbar ist. Zwischen dem hinteren Fahrzeugteil und der Arbeitsmaschine ist besonders bevorzugt eine Schnellkupplungsvorrichtung, beispielsweise nach Art eines Weiste-Dreiecks, ausgebildet. Die Arbeitsmaschine ist hierbei insbesondere oberhalb des hinteren Fahrzeugteils plazierbar, sodass beim Anheben des hinteren Fahrzeugteils die Arbeitsmaschine besonders weit nach oben anhebbar ist. Somit kann eine weitere bzw. andere Maschinenkombination für den Transport auf einer Transporteinrichtung besonders weit und damit kompakt an die Maschinenkombination platziert werden. Der Maschinenkombination, insbesondere dem Zug- und/oder Trägerfahrzeug, ist bevorzugt wenigstens ein Steuer- und/oder Regelsystem zugeordnet. Das Steuer- und/oder Regelsystem umfasst vorzugsweise wenigstens eine Auswerte- und/oder Rechnereinheit, welche dazu eingerichtet ist, die Maschinenkombination, insbesondere autonom, zu steuern- und/oder zu regeln. Das Steuer- und/oder Regelsystem kann ferner bevorzugt dazu eingerichtet sein, mit wenigstens einem anderen Steuer- und/oder Regelsystem, welches einer anderen Maschinenkombination und/oder einer Transporteinrichtung zugeordnet ist, zu kommunizieren.

In einer weiteren vorteilhaften Weiterbildung der erfindungsgemäßen Maschinenkombination ist wenigstens ein, insbesondere zwischen dem vorderen und hinteren Fahrzeugteil angeordneter, Verstellantrieb vorgesehen, welcher dazu eingerichtet ist, die Länge der Maschinenkombination, insbesondere des Zug- und/oder Trägerfahrzeug, zu verstellen. Der Verstellantrieb ist hierbei zum Verstellen der Maschinenkombination in die Transportstellung von dem Steuer- und/oder Regelsystem betätigbar. Der zumindest eine Verstellantrieb kann hierbei innerhalb der Teleskopmechanik, insbesondere innerhalb der Trag- und/oder Rahmenrohre, angeordnet sein.

Darüber hinaus ist eine erfindungsgemäße Maschinenkombination bevorzugt, bei der die Maschinenkombination nach Art eines autonom bzw. unbemannt betreibbaren Maschinengespanns ausgebildet ist. Somit kann beispielsweise eine für einen Bediener und/oder Fahrer notwendige Fahrerkabine auf der Maschinenkombination entfallen, womit besonders kleine und/oder kompakte Abmessungen für die Maschinenkombination erreichbar sind.

Die der Erfindung zugrunde liegende Aufgabe wird durch ein landwirtschaftliches Transport- und/oder Bearbeitungssystem gemäß Anspruch 1 gelöst, wobei die eine oder die mehreren Maschinenkombinationen des erfindungsgemäßen Transport- und/oder Bearbeitungssystems nach einer der vorstehend beschriebenen Ausführungsformen ausgebildet sind.

Das landwirtschaftliche Transport- und/oder Bearbeitungssystem umfasst dabei neben wenigstens einer Transporteinrichtung auch eine oder mehrere, insbesondere autonom betreibbare, Maschinenkombinationen.

In einer bevorzugten Ausführungsform des erfindungsgemäßen Transport- und/oder Bearbeitungssystems ist wenigstens ein Endgerät vorgesehen, welches dazu eingerichtet ist, wenigstens eine während des Bearbeitungsvorgangs geeignete, insbesondere georeferenzierte, Abstellposition für die Transporteinrichtung auf der Basis von Informationen der zu bearbeitenden Nutzfläche, der Maschinenkombinationen und/oder der Transporteinrichtung zu bestimmen und/oder vorzugeben. Auf dem Endgerät kann hierfür bevorzugt eine Anwendung, insbesondere nach Art einer App, vorgesehen sein, welche dazu eingerichtet ist, die jeweiligen Informationen abzurufen und die wenigstens eine optimale Abstellposition zu berechnen und/oder zu bestimmen. Das Endgerät kann hierbei ein zentraler Betriebs- bzw. Hofrechner oder ein Teil der Steuer- und/oder Regelsystems der Maschinenkombination und/oder der Transporteinrichtung sein. Besonders bevorzugt kann das Endgerät auch nach Art eines mobilen, insbesondere tragbaren, Terminals und/oder eines Smartphones ausgebildet sein.

Weitere Einzelheiten der Erfindung sind der Beispielsbeschreibung und den Zeichnungen zu entnehmen. Die Zeichnungen zeigen
- Fig.1: ein landwirtschaftliches Transport- und/oder Bearbeitungssystem in einer Seitenansicht;
- Fig.2: eine erfindungsgemäße Transporteinrichtung in perspektivischer Seitenansicht;
- Fig.3: die Transporteinrichtung während einem Wechsel eines zugeordneten Vorratsmoduls in Seitenansicht;
- Fig.4: eine erfindungsgemäße Maschinenkombination in einer perspektivischen Vorderansicht;
- Fig.5A: die Maschinenkombination in Arbeitsstellung und in einer perspektivischen Ansicht von hinten;
- Fig.5B: die Maschinenkombination in Arbeitsstellung und in Seitenansicht;
- Fig.6A: die Maschinenkombination in Transportstellung und in einer perspektivischen Ansicht von hinten;
- Fig.6B: die Maschinenkombination in Transportstellung und in Seitenansicht;
- Fig.7A: eine schematische Darstellung der Maschinenkombination mit einer längenveränderlichen Teleskopmechanik in Seitenansicht;
- Fig.7B: die Maschinenkombination in einer verlängerten Betriebsstellung in einer perspektivischen Ansicht von oben;
- Fig.7C: die Maschinenkombination aus Fig.7B in einer verkürzten Betriebsstellung;
- Fig.8A: mehrere Maschinenkombinationen beim Befahren der Transporteinrichtung während eines ersten Zeitpunkts in Seitenansicht;
- Fig.8B: mehrere Maschinenkombinationen beim Befahren der Transporteinrichtung während eines zweiten Zeitpunkts in Seitenansicht; und
- Fig.8C: mehrere Maschinenkombinationen in einer abgestellten Transportstellung auf der Transporteinrichtung und in Seitenansicht.

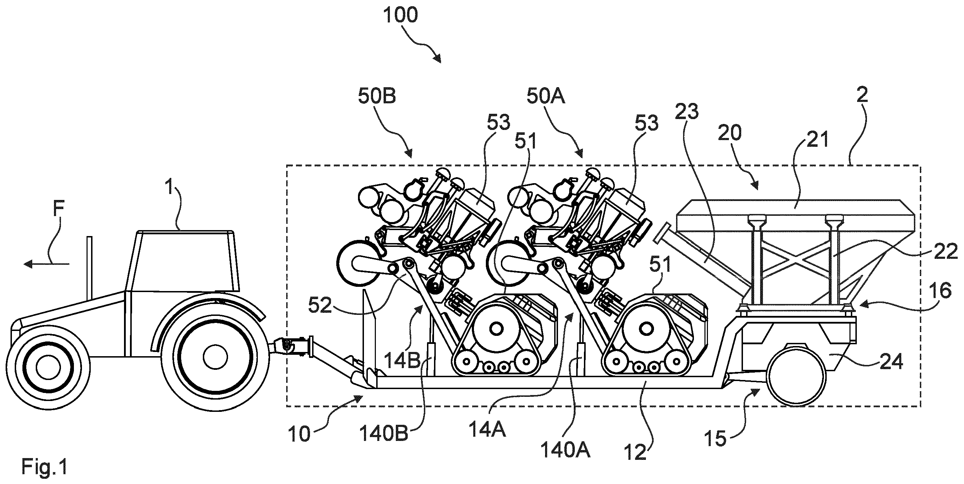

Ein hinter einem landwirtschaftlichen Schlepper 1 angehangenes landwirtschaftliches Transport- und/oder Bearbeitungssystem 100 ist in der Fig.1 zu sehen. Hierbei ist das Transport- und/oder Bearbeitungssystem 100 während des Transports in Transportstellung gezeigt. Das Transport- und/oder Bearbeitungssystem 100 weist eine nach Art einer Anhängevorrichtung ausgebildete Transporteinrichtung 10 und mehrere auf der Transporteinrichtung 10 abstellbare Maschinenkombinationen 50A, 50B auf. In Fahrtrichtung F gesehen ist in einem hinteren Bereich der Transporteinrichtung 10 ein einen Behälter 21 umfassendes Vorratsmodul 20 zu sehen.

Das gezeigte Transport- und/oder Bearbeitungssystem 100 ist derart ausgeführt, dass eine regulatorisch bzw. gesetzlich vorgegebene Transportabmessung 2 für den öffentlichen Straßenverkehr eingehalten ist. Die maximale Transportabmessung 2 beträgt dabei in etwa 12 x 2,5 x 4 m (L x B x H).

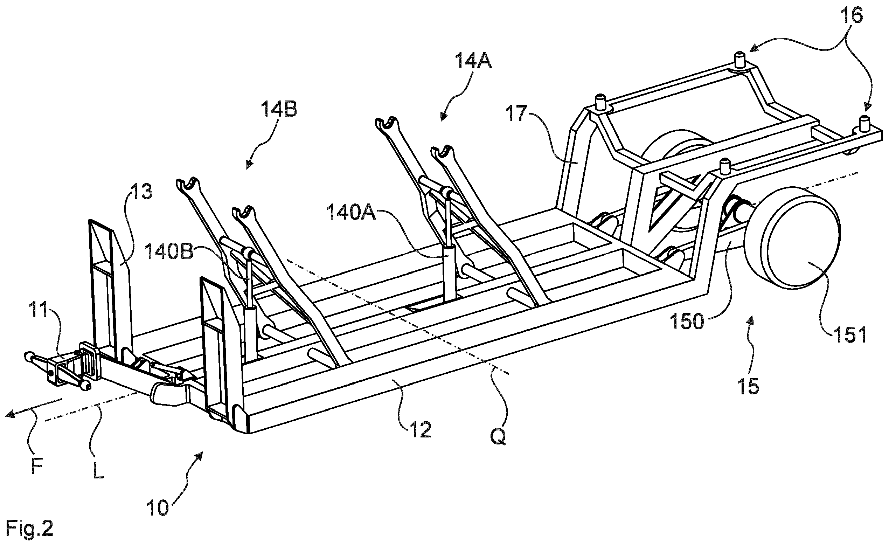

In der Fig.2 ist ein erfindungsgemäßes Ausführungsbeispiel der Transporteinrichtung 10 in einer Einzelansicht gezeigt. Die Transporteinrichtung 10 ist hierbei beispielhaft zumindest im Wesentlichen nach Art eines Plattformanhängers ausgeführt, wobei alternativ auch andere Arten von Anhängevorrichtungen, beispielsweise Tiefbettanhänger oder dergleichen denkbar wären. Auf der Vorder- bzw. Stirnseite ist eine Zugvorrichtung 11 nach Art einer Deichsel zu erkennen, welche zum Koppeln der Transporteinrichtung 10 und damit insbesondere des Transport- und/oder Bearbeitungssystems 100 mit einem Schlepper 1 vorgesehen ist. In Fahrtrichtung F hinter der Zugvorrichtung 11 ist eine Abstell- und/oder Trageplattform 12 angeordnet, auf welcher die zum Transportieren vorgesehenen Maschinenkombinationen 50A, 50B abstellbar sind.

In Fahrtrichtung F gesehen sind im vorderen Bereich der Abstell- und/oder Trageplattform 12, insbesondere stirnseitig, optional angeordnete Auffahrhilfen 13 vorgesehen, mittels denen die Abstell- und/oder Trageplattform 12 von den Maschinenkombinationen 50A, 50B befahrbar ist. Die Auffahrhilfen 13 sind hierbei beispielhaft nach Art von schwenkbaren Auffahrkeilen ausgebildet. In einer alternativen oder zusätzlichen Ausführungsform können derartige Auffahrhilfen 13 auch abnehmbar ausgebildet und/oder seitlich, zum Befahren der Abstell- und/oder Trageplattform 12 von der Seite, angeordnet sein.

Weiterhin sind entlang der Abstell- und/oder Trageplattform 12 mehrere, insbesondere zwei, Haltevorrichtungen 14A, 14B zu erkennen, welche insbesondere in Fahrtrichtung F gesehen hintereinander und/oderr jeweils schwenkbar an der Abstell- und/oder Trageplattform 12 angeordnet sind. Hierbei sei explizit nochmal darauf hingewiesen, dass in einer alternativen erfindungsgemäßen Ausführungsform auch nur eine einzelne derartige Haltevorrichtung 14A, 14B vorgesehen sein kann. Die Haltevorrichtung 14A, 14B ist erfindungsgemäß dazu eingerichtet, die auf der Abstell- und/oder Trageplattform 12 abstellbaren Maschinenkombinationen 50A, 50B zumindest teilweise aus einer abgestellten Ausgangsstellung in eine gegenüber der Abstell- und/oder Trageplattform 12 angestellten Transportstellung zu verstellen, wie bereits in der Fig.1 zu sehen ist. Insbesondere ist hierbei vorgesehen, dass die jeweilige Haltevorrichtung 14A, 14B form- und/oder kraftschlüssig mit der jeweiligen zugeordneten Maschinenkombination 50A, 50B, insbesondere mit einem dem Zug- und/oder Trägerfahrzeug zugeordneten Rahmen, verbindbar ist

Folglich sind die mehreren Maschinenkombinationen 50A, 50B somit mittels der Haltevorrichtungen 14A, 14B ineinander passend, insbesondere übereinander ragend, auf der Transporteinrichtung 10 abstellbar.

Die in der Fig.2 gezeigten Haltevorrichtungen 14A, 14B sind in einer angehobenen bzw. hoch geklappten Transportstellung gezeigt, wobei die damit anhebbaren Maschinenkombinationen 50A, 50B zur besseren Übersicht ausgeblendet sind. Die Haltevorrichtungen 14A, 14B sind wie ebenfalls zu erkennen ist, mittels wenigstens jeweils einem zugeordneten Stellantrieb 140A, 140B dazu eingerichtet, wenigstens eine der auf der Abstell- und/oder Trageplattform 12 abstellbaren Maschinenkombinationen 50A, 50B zumindest teilweise aus der abgestellten, insbesondere etwa horizontal weisenden, Ausgangsstellung in eine zumindest teilweise angehobene, insbesondere etwa vertikal und/oder schräg nach oben weisende, Transportstellung anzuheben. Die Haltevorrichtungen 14A, 14B können weiterhin zum Entladen der transportieren Maschinenkombinationen 50A, 50B, insbesondere mittels des jeweiligen Stellantriebs 140A, 140B, zur Abstell- und/oder Trageplattform 12 hin abgesenkt werden. In der abgesenkten bzw. herunter geklappten Stellung können die Haltevorrichtungen 14A, 14B zumindest in etwa bündig oder angelegt an der Abstell- und/oder Trageplattform 12 verbracht und/oder verstaut werden.

Die Transporteinrichtung 10 weist darüber hinaus wenigstens ein, hier im hinteren Bereich bzw. ein im Heck angeordnetes, Fahrwerk 15 auf. Das Fahrwerk 15 ist dabei höhenverstellbar ausgebildet und insbesondere über eine Fahrwerksaufhängung 150 mit der Abstell- und/oder Trageplattform 12 verbunden. Weiterhin umfasst das Fahrwerk 15 mehrere Fahrwerksräder 151 mittels denen die Transporteinrichtung 10 über eine Fahrbahn und/oder einen Ackerboden abgerollt werden kann. Insbesondere ist das Fahrwerk 15 dazu vorgesehen, die Höhe und/oder Lage, insbesondere Neigung, der Transporteinrichtung 10 zu beeinflussen. Hierzu kann das Fahrwerk 15 insbesondere dazu eingerichtet sein, die Neigung der Transporteinrichtung 10 um eine Längsachse L und/oder eine Querachse Q der Transporteinrichtung 10 zu verstellen und/oder zu neigen. Dies erlaubt ein besonders standsicheres Absetzen der Transporteinrichtung 10 auf unebenen und/oder unbefestigten Böden. Insbesondere kann somit auch eine für das Be- und/oder Entladen der Maschinenkombinationen 50A, 50B optimale Ausrichtung der Abstell- und/oder Trageplattform 12 einstellbar sein, da das Fahrwerk 15 insbesondere dazu eingerichtet ist, die Neigung und/oder Höhe der Transporteinrichtung 10 zum Be- und/oder Entladen der Maschinenkombinationen 50A, 50B in Abhängigkeit der Topografie einer Abstellfläche im Bereich der Transporteinrichtung 10 anzupassen.

Über das Fahrwerk 15 kann weiterhin insbesondere die Höhe der Transporteinrichtung 10 im Heckbereich anpassbar sein. Hierdurch kann die Aufnahme und/oder das Lösen des Vorratsmoduls 20 an und/oder von der Transporteinrichtung 10 nach Art einer Wechselbrücke umgesetzt werden. Die Transporteinrichtung 10 weist eine ebenfalls im Heckbereich der Transporteinrichtung 10 angeordnete Kopplungsvorrichtung 16 auf, welche beispielhaft an einem Rahmen 17 angeformt ist und zum Koppeln des Vorratsmoduls 20 mit der Transporteinrichtung 10 vorgesehen ist. Darüber hinaus kann die Kopplungsvorrichtung 16 so wie ebenfalls dargestellt optional zumindest teilweise an einem dem Vorratsmodul zugeordneten Hilfs- bzw. Wechselrahmen 22 oder alternativ oder zusätzlich direkt am Behälter 21 ausgebildet sein.

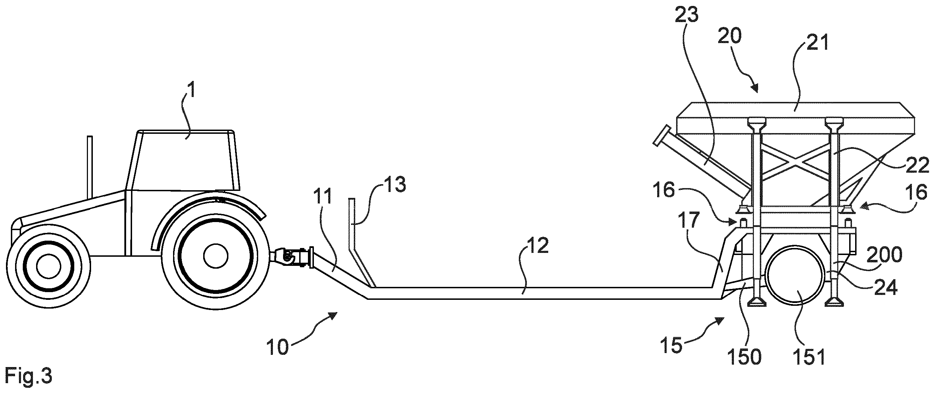

In der Fig.3 ist das Aufnehmen und/oder Lösen des Vorratsmoduls 20 dargestellt. Die Transporteinrichtung 10 ragt dabei, insbesondere mit dem Heck und/oder der Kopplungsvorrichtung 16, in eine externe Aufnahme- und/oder Abstellvorrichtung 200 rein. Zum Aufnehmen des, insbesondere befüllten, Vorratsmoduls 20 wird die zuvor abgesenkte Transporteinrichtung 10 mittels des höhenverstellbaren Fahrwerks 15 soweit angehoben, bis das Vorratsmodul 20 aus der externen Aufnahme- und/oder Abstellvorrichtung 200 ausgehoben und mit der Kopplungsvorrichtung 16 verbunden ist. Anders herum kann auf der Transporteinrichtung 10 befindliches Vorratsmodul 20 wieder gelöst werden, in dem die Transporteinrichtung 10 beim hineinragen in die externen Aufnahme- und/oder Abstellvorrichtung 200 mittels des Fahrwerks 15 abgesenkt wird.

Alternativ dazu kann das Vorratsmodul 20 auch fest bzw. unlösbar mit der Transporteinrichtung 10 verbunden sein.

Das Vorratsmodul 10 ist hierbei je nach Ausführungsvariante zum Vorhalten von Betriebs- und/oder Verteilmaterialien vorgesehenen. Derartige Betriebsmaterialien sind zum Betreiben der Maschinenkombinationen 50A, 50B vorgesehen und beispielsweise als Kraftstoff, Schmierstoff, hydraulische Flüssigkeit oder dergleichen ausgeführt. Bei den Verteilmaterialien kann es sich je nach Ausführung der Maschinenkombination 50A, 50B beispielsweise um granulares oder flüssiges Verteilgut wie etwa Saatgut, Dünger, Pflanzenschutzmittel oder dergleichen handeln, welche zum Ausbringen und/oder Applizieren auf einer zu bearbeitenden Nutzfläche vorgesehen sind.

Darüber hinaus weist das Vorratsmodul 20 wenigstens ein Förderorgan 23 auf, welches zum Versorgen und/oder zum Befüllen der auf und/oder an der Transporteinrichtung 10 abstellbaren Maschinenkombination 50A, 50B vorgesehen ist. Das Förderorgan 23 ist dazu eingerichtet, das in dem Behälter 21 vorgehaltene Betriebs- und/oder Verteilmaterial in bedarfsgerechter und/oder einstellbarer Weise zur und/oder in die Maschinenkombination 50A, 50B zu fördern. Das Förderorgan 23 ist hierbei beweglich, insbesondere schwenkbar, innerhalb des Vorratsmoduls 20 angeordnet und kann insbesondere in Abhängigkeit der jeweiligen zu befüllenden Maschinenkombination 50A, 50B ausgerichtet werden.

Bei einer ebenfalls erfindungsgemäßen, in den Figuren jedoch nicht gezeigten, Ausführungsform der Transporteinrichtung 10 kann die Abstell- und/oder Trageplattform 12 nach Art einer Sammel- und/oder Auffangvorrichtung zum Auffangen von, beispielsweise während eines Befüllvorgangs verschütteten, Betriebs- und/oder Verteilmaterialien ausgebildet sein.

Ferner ist ein, insbesondere nach Art eines Energiespeichers ausgebildetes, Versorgungsmodul 24 vorgesehen, welches an der Transporteinrichtung, insbesondere unterhalb des Vorratsmoduls 20 und/oder oberhalb des Fahrwerks 15, angeordnet ist. Das Versorgungsmodul 24 ist dazu eingerichtet, die Transporteinrichtung 10, insbesondere dessen Verbraucher und/oder Stellantriebe, mit elektrischer, hydraulischer und/oder mechanischer Energie zu versorgen und/oder zu betreiben. Ferner ist vorgesehen, dass das Versorgungsmodul 24 alternativ oder zusätzlich dazu eingerichtet ist, wenigstens eine Maschinenkombination 50A, 50B, insbesondere während dem Befüllvorgang, mit Energie zu versorgen und/oder zu betreiben. Hierzu kann beispielsweise eine an der Transporteinrichtung 10, insbesondere am Vorrats- und/oder Versorgungsmodul 24, angeordnete erste Schnittstelle vorgesehen sein, welche in leitender Weise mit einer an wenigstens einer Maschinenkombination 50A, 50B angeordneten zweiten Schnittstelle verbindbar ist. Alternativ oder zusätzlich kann auch das Versorgungsmodul über die Schnittstellen mittels der Maschinenkombinationen 50A, 50B wiederaufladbar und/oder befüllbar sein.

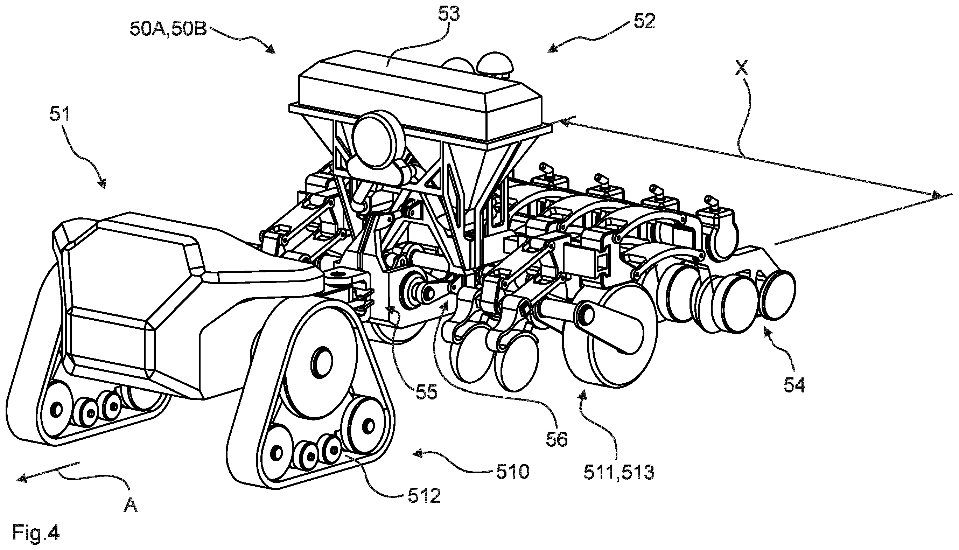

Die Fig.4 zeigt ein erfindungsgemäßes Ausführungsbeispiel der nach Art eines landwirtschaftlichen Maschinengespanns ausgebildeten Maschinenkombination 50A, 50B, in einer Einzelansicht. Die Maschinenkombination 50A, 50B ist hierbei aus einem Zug- und/oder Trägerfahrzeug 51 und einer landwirtschaftlichen Arbeitsmaschine 52, welche hier als Sä- und/oder Düngermaschine zum Ausbringen granularer Verteilmaterialien ausgebildet ist, zusammengesetzt. Hierbei sei explizit erwähnt, dass die Arbeitsmaschine 52 alternativ oder zusätzlich auch nach Art einer Feldspritze mit einem, insbesondere klappbaren, Spritzgestänge zum Ausbringen flüssiger Verteilmaterialien oder als Bodenbearbeitungs- und/oder Pflanzenbehandlungsmaschine, wie z.B. einer Hacke, ausgebildet sein kann.

Die Arbeitsmaschine 52 weist hierbei einen zum Vorhalten von Verteilmaterial geeigneten Vorratsbehälter 53 und eine Vielzahl quer zu einer Arbeitsrichtung A angeordneter Bodenbearbeitungs- und/oder Materialablagewerkzeuge 54 auf, welche nach Art von reihenbezogenen Schareinheiten ausgebildet sind. Die Arbeitsbreite X der Arbeitsmaschine 52 beträgt hierbei beispielhaft etwa 3 m, wobei alternativ dazu auch Arbeitsbreiten X zwischen 2 m und 10 m, insbesondere zwischen 3 m und 8 m denkbar wären.

Das Zug- und/oder Trägerfahrzeug 51 ist mittels einer Kupplungsvorrichtung 56, welche hier beispielhaft nach Art einer Weiste-Schnellkupplungsvorrichtung ausgebildet ist, mit der Arbeitsmaschine 52 gekoppelt. Das Zug- und/oder Trägerfahrzeug 51 weist einen vorderen und hinteren Fahrzeugteil 510, 511 auf, welche insbesondere horizontal schwenkbar und beispielhaft mittels eines Knickgelenks 55 miteinander verbunden sind. Der vordere Fahrzeugteil 510 umfasst die zum Antreiben der Maschinenkombination 50A, 50B und/oder zum Ziehen der Arbeitsmaschine 52 notwendige Antriebseinheit mit einem Fahrwerk 512. Der hintere Fahrzeugteil 511 ist nach Art eines Unterwagens ebenfalls mit einem Fahrwerk 513 ausgestattet, auf dem die Arbeitsmaschine 52 in aufgesetzter Weise platziert ist.

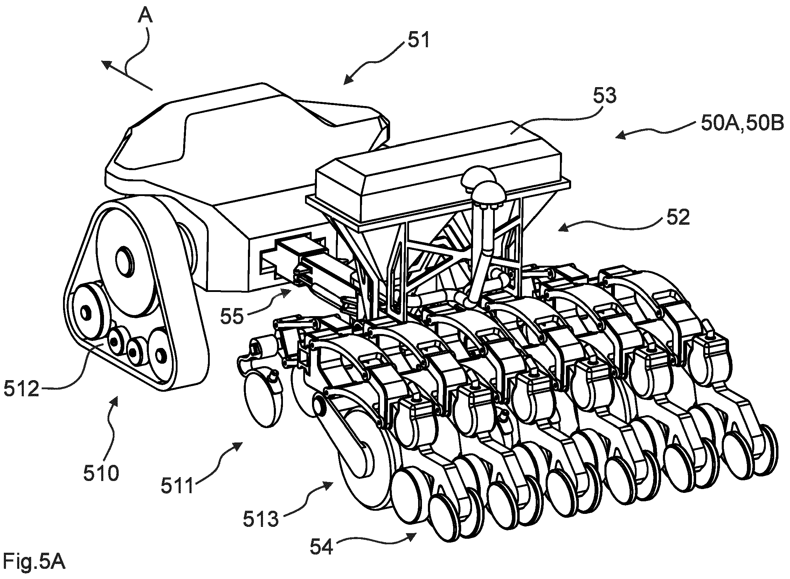

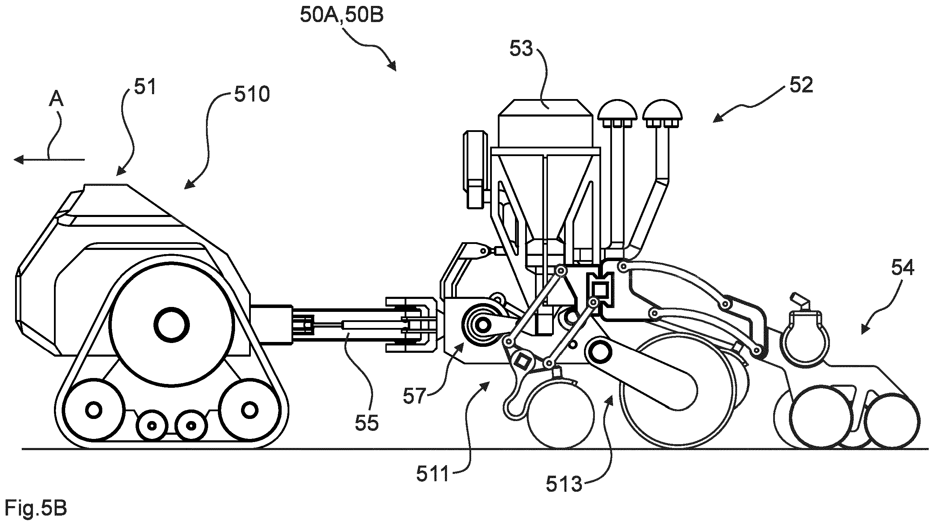

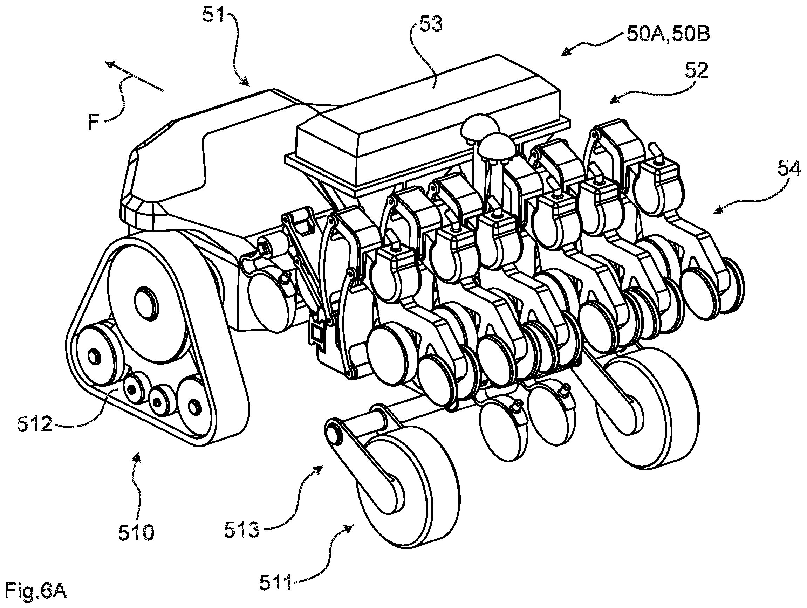

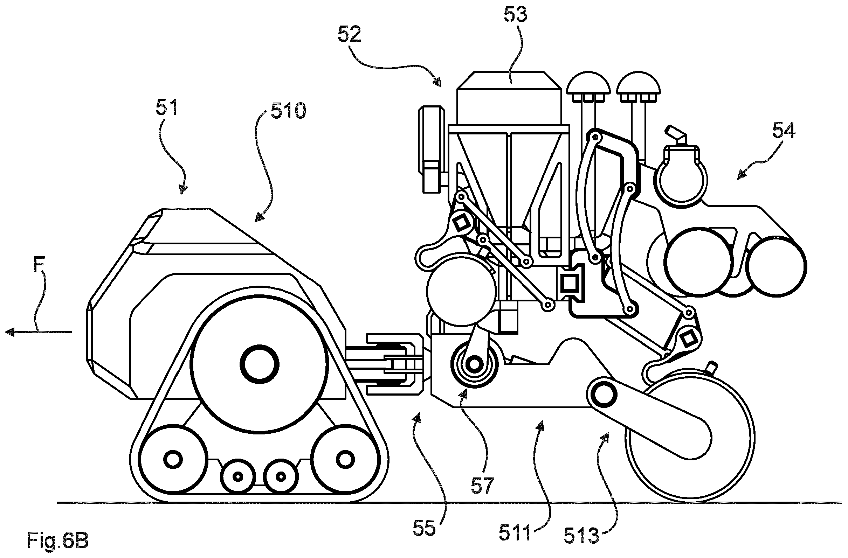

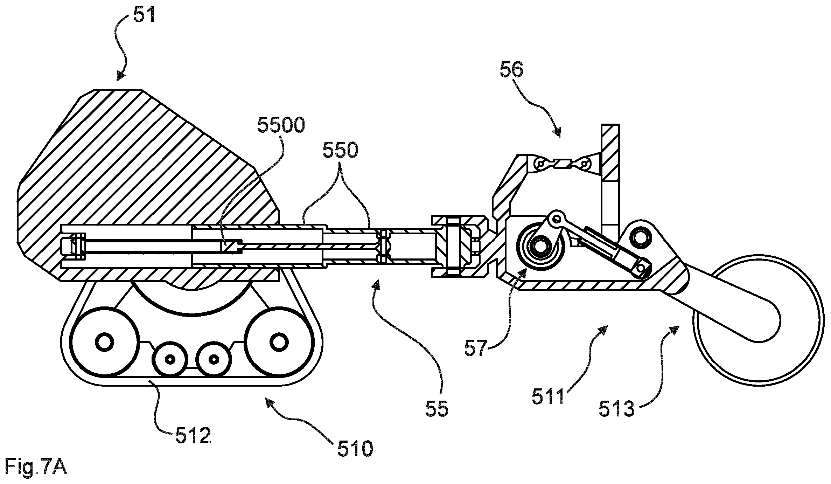

Die Maschinenkombination 50A, 50B weist darüber hinaus eine, in der Fig.7A beispielhaft gezeigte, Hebeeinrichtung 57 auf, welche dazu eingerichtet ist, die Maschinenkombination 50A, 50B, insbesondere die Arbeitsmaschine 52, zwischen zumindest zwei unterschiedlichen Stellungen zu verstellen. Die Fig.5A und 5B zeigen die Maschinenkombination 50A, 50B, insbesondere die Arbeitsmaschine 52, in unterschiedlichen Ansichten in einer mittels der Hebeeinrichtung 57 auf den Boden abgesenkten Arbeitsstellung. In den Fig.6A und 6B ist die Maschinenkombination 50A, 50B, insbesondere die Arbeitsmaschine 52, in unterschiedlichen Ansichten in einer mittels der Hebeeinrichtung 57 vom Boden angehobenen Transportstellung gezeigt.

Die Fig.7A zeigt einen beispielhaften Mechanismus zum Ändern einer Maschinenlänge der Maschinenkombination 50A, 50B in einer Detailansicht. Insbesondere ist hierbei zu sehen, dass der vordere und hintere Fahrzeugteil 510, 511 zum Ändern der Maschinenlänge translatorisch und/oder in Fahrtrichtung F zueinander verschiebbar sind. Die Maschinenkombination 50A, 50B weist hierbei eine, insbesondere zwischen dem vorderen und hinteren Fahrzeugteil 510, 511 angeordnete, Teleskopmechanik auf, welche bestehend aus mehreren ineinanderschiebbaren und/oder auseinanderziehbaren Tragrohren 550 ausgebildet ist.

Weiterhin ist hier ein zwischen dem vorderen und hinteren Fahrzeugteil 510, 511 angeordneter Verstellantrieb 5500 zu erkennen, welcher durch ein der Maschinenkombination 50A, 50B zugeordnetes Steuer- und/oder Regelsystem ansteuerbar ist und dazu eingerichtet ist, die Länge der Maschinenkombination 50A, 50B, insbesondere des Zug- und/oder Trägerfahrzeugs 51, zu verstellen. Der Verstellantrieb 5500 umfasst hierbei beispielhaft wenigstens einen Stellzylinder, welcher innerhalb der Tragrohre 550 angeordnet ist. Alternativ oder zusätzlich kann der Verstellantrieb auch mehrere bzw. weitere Stellzylinder umfassen, welche von außen an den Tragrohren 550 angeordnet sind. Darüber hinaus kann der Verstellantrieb 5500 alternativ oder zusätzlich auch anders wirkende Stellantriebe, beispielsweise Drehantriebe, umfassen.

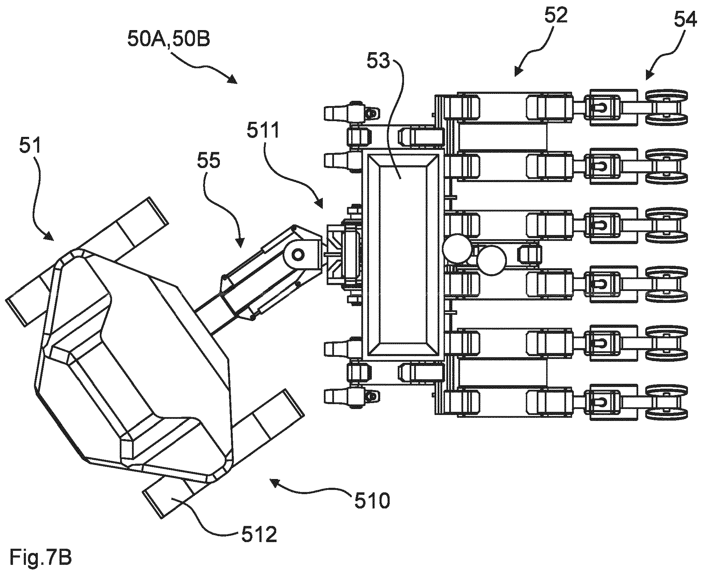

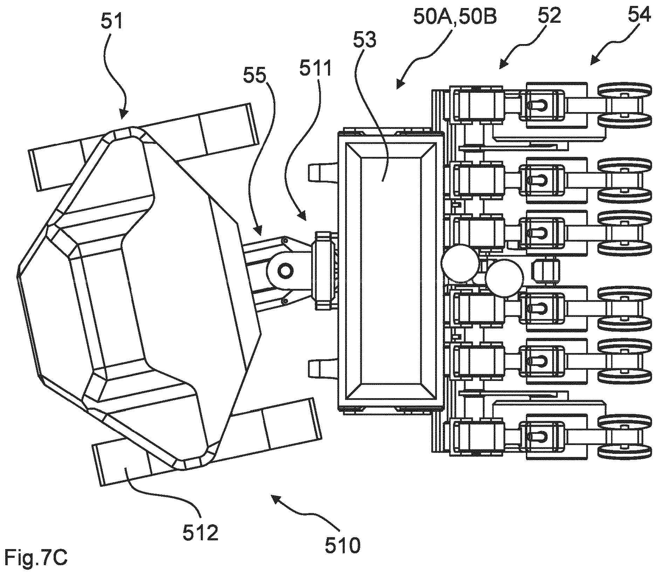

Darüber hinaus ist hierbei vorgesehen, dass die Länge der Maschinenkombination 50A, 50B für die zum Transport auf der Transporteinrichtung 10 vorgesehene Transportstellung verkürzt und für die während des Feldeinsatzes vorgesehene Arbeitsstellung verlängert wird. Die Fig.7B und 7C zeigen die Funktionsweise zum Ändern der Maschinenlänge in anschaulicher Weise. In der Fig.7B ist eine Maschinenkombination 50A, 50B in Arbeitsstellung gezeigt, bei der die beiden Fahrzeugteile 510, 511 voneinander weg verschoben sind und die Maschinenkombination 50A, 50B somit verlängert ist. Fig.7C zeigt die Maschinenkombination 50A, 50B, bei welcher die beiden Fahrzeugteile 510, 511 zueinander hin verschoben sind und die Maschinenkombination 50A, 50B somit verkürzt ist.

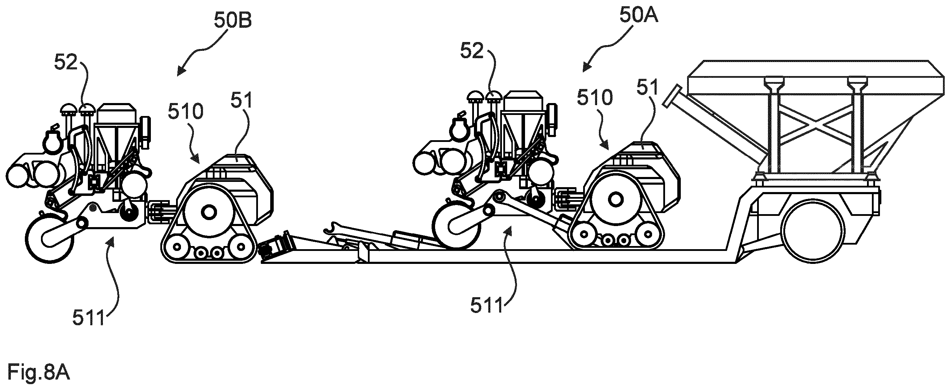

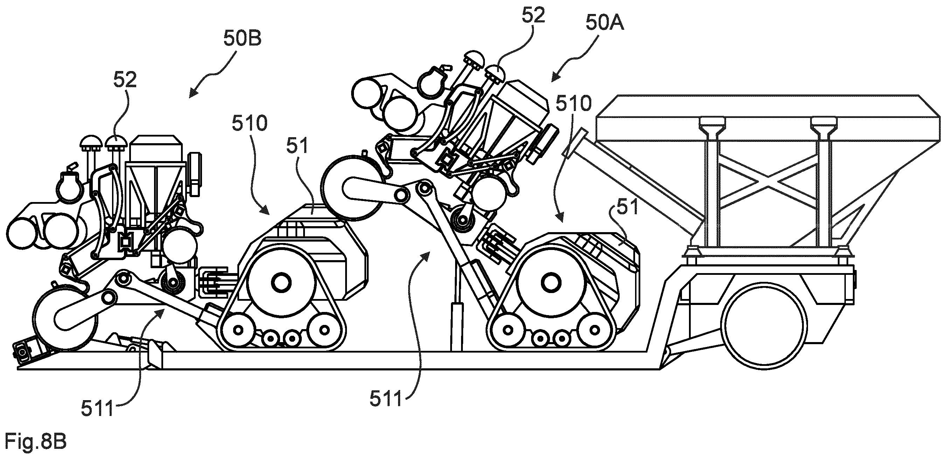

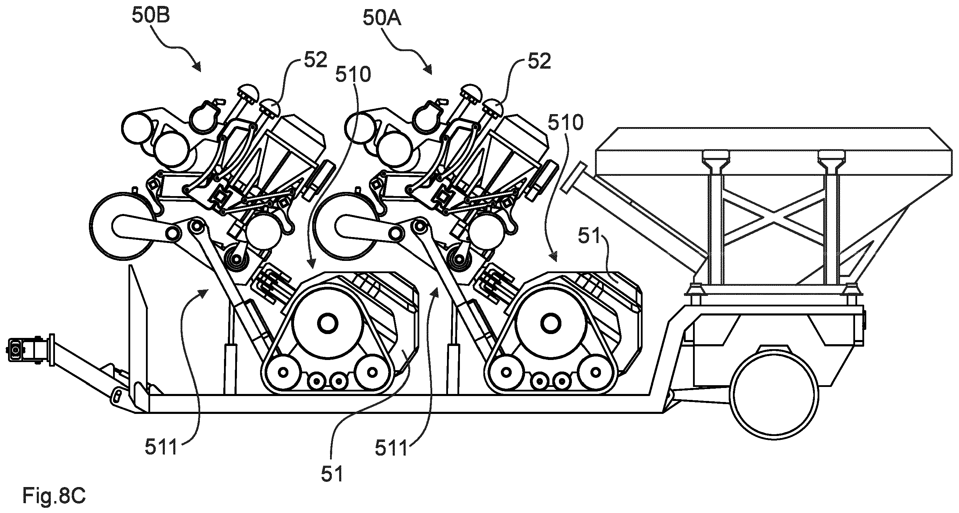

Der Ablauf zum Befahren der Transporteinrichtung 10 durch die Maschinenkombinationen 50A, 50B ist in den Fig.8A bis 8C dargestellt. Wie in der Fig.8A zu erkennen ist, wird die Zugvorrichtung 11, insbesondere die Deichsel, der Transporteinrichtung 10 vor dem Auffahren der Maschinenkombinationen 50A, 50B gegenüber der Abstell- und/oder Trageplattform 12 verstellt bzw. abgesenkt. Alternativ zur dargestellten Ausführungsform kann die Zugvorrichtung 11 auch seitlich verschwenkbar oder auch abnehmbar sein. Anschließend werden die Maschinenkombinationen 50A, 50B nacheinander und von vorne, insbesondere oberhalb der Zugvorrichtung 11, auf die abgesenkte und/oder ausgerichtete Abstell- und/oder Trageplattform 12 aufgefahren. Sobald wenigstens eine der für den Transport vorgesehenen Maschinenkombinationen 50A, 50B auf einer vorgesehenen Soll-Abstellposition platziert ist, wird die jeweilige Maschinenkombination 50A, 50B mittels der zugeordneten Haltevorrichtung 14A, 14B aus der abgestellten Ausgangsstellung in eine gegenüber der Abstell- und/oder Trageplattform 12 angestellte Transportstellung angehoben. Hierbei ist insbesondere vorgesehen, dass zunächst die erste Maschinenkombination 50A mittels der Haltevorrichtung 14A angehoben wird und daraufhin die zweite Maschinenkombination 50B zumindest teilweise unterhalb der ersten Maschinenkombination 50A, insbesondere deren angehobenen bzw. hinteren Fahrzeugteil 511 und/oder der Arbeitsmaschine 52, platziert wird, wie insbesondere in der Fig.8B gut zu erkennen ist. Anschließend wird die zweite Maschinenkombination 50B, insbesondere deren hinterer Fahrzeugteil 511 und/oder Arbeitsmaschine 52, von der dazu zugeordneten, insbesondere zweiten, Haltevorrichtung 14B von der abgestellten Ausgangsstellung in die Transportstellung angehoben. Abschließend sind die mehreren Maschinenkombinationen 50A, 50B wie in Fig.8C gezeigt, ineinander passend bzw. in verschachtelter Weise transportbereit auf der Abstell- und/oder Trageplattform 12 platziert.

Um eine maximale Einsatzzeit der, insbesondere autonom, betreibbaren Maschinenkombinationen 50A, 50B zu erreichen, ist vorgesehen, dass die Maschinenkombinationen 50A, 50B über die Transporteinrichtung 10 wie nachfolgend näher beschrieben versorgt werden. Sobald wenigstens eine der Maschinenkombinationen 50A, 50B einen definierten Füllstand der Betriebs- und/oder Verteilmaterialien erreicht und/oder unterschreitet, kann die jeweilige Maschinenkombination 50A, 50B zum Versorgen und/oder Befüllen auf einer dafür vorgesehenen Soll-Abstellposition auf und/oder neben der Abstell- und/oder Trageplattform 12 platziert werden. Hierfür kann die Maschinenkombination 50A, 50B gleich oder zumindest ähnlich wie in der Fig.8A dargestellt auf die Transporteinrichtung 10 aufgefahren werden.

Des Weiteren kann hierfür bei einer weiteren nicht gezeigten Ausführungsform eine Erfassungs- und/oder Auswertevorrichtung an der Transporteinrichtung 10 angeordnet sein. Die Erfassungs- und/oder Auswertevorrichtung ist dabei dazu eingerichtet, die auf der Abstell- und/oder Trageplattform 12 abstellbare Maschinenkombination 50A, 50B in der dafür vorgesehenen Soll-Abstellposition zu erfassen und/oder zu ermitteln. Hierfür kann das Erfassungs- und/oder Auswertevorrichtung wenigstens einen, insbesondere an der Transporteinrichtung 10 und/oder an wenigstens einer Maschinenkombination 50A, 50B angeordneten, berührungsfrei erfassenden Sensoren, beispielsweise einen optischen Sensor und/oder eine Kamera oder dergl., umfassen. Alternativ oder zusätzlich kann die Erfassungs- und/oder Auswertevorrichtung auch Wiegesensorsysteme umfassen, welche an der Transporteinrichtung 10, insbesondere an der Abstell- und/oder Trageplattform 12, angeordnet sind. Das der Transporteinrichtung 10 zugeordnete Steuer- und/oder Regelsystem, kann hierbei ferner dazu eingerichtet sein, das Vorratsmodul 20 und/oder das Versorgungsmodul 24 in Abhängigkeit der erfassten und/oder ermittelten Maschinenkombination 50A, 50B anzusteuern.

Insbesondere kann hierbei ein der Erfassungs- und/oder Auswertevorrichtung zugeordneter erster Positions- und/oder Lagegeber vorgesehen sein, mittels dem die Erfassungs- und/oder Auswertevorrichtung dazu eingerichtet ist, eine Position und/oder Lage der Transporteinrichtung 10, insbesondere der Soll-Abstellposition, in georeferenzierter Weise zu bestimmen. Alternativ oder zusätzlich kann das Steuer- und/oder Regelsystem dazu eingerichtet sein, die Position und/oder Lage der Transporteinrichtung 10, insbesondere die georeferenzierte Soll-Abstellposition, mit einer Position und/oder Lage, insbesondere einer georeferenzierten Ist-Position, der Maschinenkombination 50A, 50B, welche mittels einem der Maschinenkombination 50A, 50B zugeordneten zweiten Positions- und/oder Lagegeber bestimmbar ist, abzugleichen. Der eine oder die mehreren Positions- und/oder Lagegeber können hierbei beispielweise nach Art eines GPS-Systems, insbesondere einem RTK-GPS-Systems, ausgeführt sein. Alternativ oder zusätzlich kann hierbei auch die jeweilige Ausrichtung der Transporteinrichtung 10 mit einer Ausrichtung der abzustellenden und/oder zu versorgenden Maschinenkombination 50A, 50B abgleichbar sein.

Sobald die Position, Lage und/oder Ausrichtung der jeweiligen Maschinenkombination 50A, 50B mit der Transporteinrichtung 10, insbesondere der Soll-Abstellposition und/oder einer Soll-Ausrichtung, zumindest in etwa übereinstimmt, kann das Steuer- und/oder Regelsystem dazu eingerichtet sein, das Vorratsmodul 20 und/oder das Versorgungsmodul 24 bedarfsgerecht für den Versorgungs- und/oder Befüllvorgang freizugeben.

Des Weiteren kann vorgesehen sein, dass das Förderorgan 23 in Abhängigkeit der erfassten und zu versorgenden bzw. zu befüllenden Maschinenkombination 50A, 50B einstellbar und/oder anpassbar ist. Beispielsweise kann dem Förderorgan 23 hierbei eine Aktorik zugeordnet sein, welche dazu eingerichtet ist, das Förderorgan 23 auf die Maschinenkombination 50A, 50B, insbesondere auf eine am zu befüllenden Vorratsbehälter 53 angeordnete Einfüllöffnung, auszurichten und/oder zu positionieren. Alternativ oder zusätzlich kann vorgesehen sein, dass während des Befüllvorgangs eine der Transporteinrichtung 10 und/oder der Maschinenkombination 50A, 50B zugeordnete Füllstandssensorik überwachte wird, so dass der Befüllvorgang in Abhängigkeit der Füllstandssensorik gestartet und/oder beendet werden kann. Weiterhin kann die Abstell- und/oder Trageplattform 12 in einer alternativen Ausführungsform zumindest teilweise nach Art einer Auffangwanne ausgebildet sein, so dass während des Befüllvorgangs verschüttete Betriebs- und/oder Verteilmaterialien innerhalb der Transporteinrichtung 10 aufgefangen werden können.

Darüber hinaus kann dem beschriebenen landwirtschaftlichen Transport- und/oder Bearbeitungssystem wenigstens ein in den Figuren nicht gezeigtes Endgerät zugeordnet sein, welches dazu eingerichtet ist, zumindest eine während des Bearbeitungsvorgangs bzw. des Feldeinsatzes geeignete, insbesondere georeferenzierte, Abstellposition für die Transporteinrichtung 10, auf der Basis von Informationen der zu bearbeitenden Nutzfläche, der Maschinenkombinationen 50A, 50B und/oder der Transporteinrichtung 10 zu bestimmen und/oder vorzugeben.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

Insbesondere sei hierbei nochmal erwähnt, dass die gezeigte Transporteinrichtung 10 und die Maschinenkombinationen 50A, 50B autonom bzw. unbemannt betreibbar ausgebildet sind.

### Bezugszeichenliste

- 1: Landwirtschaftlicher Schlepper
- 2: Transportabmessung
- 10: Transporteinrichtung
- 100: Landwirtschaftliches Transport- und/oder Bearbeitungssystem
- 11: Zugvorrichtung
- 12: Abstell- und/oder Trageplattform
- 13: Auffahrhilfen
- 14A, 14B: Haltevorrichtungen
- 140A, 140B: Stellantrieb
- 15: Fahrwerk der Transporteinrichtung
- 150: Fahrwerksaufhängung
- 151: Fahrwerksräder
- 16: Kopplungsvorrichtung
- 17: Rahmen der Transporteinrichtung
- 20: Vorratsmodul
- 200: Externe Aufnahme- und/oder Abstellvorrichtung
- 21: Behälter
- 22: Hilf- bzw. Wechselrahmen
- 23: Förderorgan
- 24: Versorgungsmodul
- 50A, 50B: Maschinenkombinationen
- 51: Zug- und/oder Trägerfahrzeug
- 510: Vorderer Fahrzeugteil
- 511: Hinterer Fahrzeugteil
- 512: Fahrwerk des vorderen Fahrzeugteils
- 513: Fahrwerk des hinteren Fahrzeugteils
- 52: Landwirtschaftliche Arbeitsmaschine
- 53: Vorratsbehälter
- 54: Bodenbearbeitungs- und/oder Materialablagewerkzeuge
- 55: Knickgelenk
- 550: Tragrohre
- 5500: Verstellantrieb
- 56: Kupplungsvorrichtung
- 57: Hebeeinrichtung

- A: Arbeitsrichtung
- F: Fahrtrichtung
- L: Längsachse
- Q: Querachse
- X: Arbeitsbreite

## Patentansprüche

1. Landwirtschaftliches Transport- und/oder Bearbeitungssystem (100), mit
- einer Transporteinrichtung (10) zur Aufnahme einer Maschinenkombination (50A, 50B) aus einer landwirtschaftlichen Arbeitsmaschine (52) und einem Zug- und/oder Trägerfahrzeug (51), mit einer Abstell- und/oder Trageplattform (12) auf der eine zum Transportieren vorgesehene Maschinenkombination (50A, 50B) abstellbar ist; und
- einer oder mehreren, insbesondere autonom betreibbaren, Maschinenkombinationen (50A, 50B) welche nach Art eines landwirtschaftlichen Maschinengespanns, bestehend aus einer landwirtschaftlichen Arbeitsmaschine (52) und einem Zug- und/oder Trägerfahrzeug (51), ausgebildet sind,;
**dadurch gekennzeichnet, dass** die Arbeitsmaschine (52) zumindest teilweise aus einer abgestellten, insbesondere abgesenkten, Ausgangsstellung in eine gegenüber dem Zug- und/oder Trägerfahrzeug (51) angestellte, insbesondere angehobene, Transportstellung verstellbar ist, wobei eine Hebeeinrichtung (57) vorgesehen ist, welche dazu eingerichtet ist, die Arbeitsmaschine (52), zumindest teilweise anzuheben.

2. Landwirtschaftliches Transport- und/oder Bearbeitungssystem (100) nach Anspruch 1, **gekennzeichnet durch** wenigstens ein Endgerät, welches dazu eingerichtet ist, wenigstens eine während des Bearbeitungsvorgangs geeignete, insbesondere georeferenzierte, Abstellposition für die Transporteinrichtung (10) auf der Basis von Informationen der zu bearbeitenden Nutzfläche, der Maschinenkombinationen (50A, 50B) und/oder der Transporteinrichtung (10) zu bestimmen und/oder vorzugeben.

3. Landwirtschaftliches Transport- und/oder Bearbeitungssystem (100) nach zumindest einem der vorgenannten Ansprüche 1 oder 2, **gekennzeichnet durch** eine Haltevorrichtung (14A, 14B), mittels welcher die wenigstens eine auf der Abstell- und/oder Trageplattform (12) abstellbare Maschinenkombination (50A, 50B) zumindest teilweise aus einer abgestellten Ausgangsstellung in eine derart gegenüber der Abstell- und/oder Trageplattform (12) angestellten Transportstellung verstellbar ist, dass mehrere Maschinenkombinationen (50A, 50B) ineinander passend, insbesondere übereinander ragend, auf der Transporteinrichtung (10) abstellbar sind.

4. Landwirtschaftliches Transport- und/oder Bearbeitungssystem (100) nach Anspruch 3, **dadurch gekennzeichnet, dass** die Haltevorrichtung (14A, 14B) mittels wenigstens einem zugeordneten Stellantrieb (140A, 140B) dazu eingerichtet ist, wenigstens eine der auf der Abstell- und/oder Trageplattform (12) abstellbaren Maschinenkombinationen (50A, 50B) zumindest teilweise aus der abgestellten, insbesondere etwa horizontal weisenden, Ausgangsstellung in die zumindest teilweise angehobene, insbesondere etwa vertikal und/oder schräg nach oben weisende, Transportstellung anzuheben.

5. Landwirtschaftliches Transport- und/oder Bearbeitungssystem (100) nach Anspruch 4, **dadurch gekennzeichnet, dass** die Transporteinrichtung (10) mehrere Haltevorrichtungen (14A, 14B) umfasst, wobei jeder auf der Transporteinrichtung (10) abstellbaren Maschinenkombinationen (50A, 50B) jeweils wenigstens eine Haltevorrichtung (14A, 14B) zugeordnet ist, und wobei jede der mehreren abstellbaren Maschinenkombinationen (50A, 50B) mittels der Haltevorrichtungen (14A, 14B) verstellbar, insbesondere anhebbar, sind.

6. Landwirtschaftliches Transport- und/oder Bearbeitungssystem (100) nach zumindest einem der vorgenannten Ansprüche 3 bis 5, **dadurch gekennzeichnet, dass** die Haltevorrichtung (14A, 14B) form- und/oder kraftschlüssig mit wenigstens einer der abstellbaren Maschinenkombinationen (50A, 50B), insbesondere mit einem dem Zug- und/oder Trägerfahrzeug (51) zugeordneten Rahmen, verbindbar ist.

7. Landwirtschaftliches Transport- und/oder Bearbeitungssystem (100) nach zumindest einem der vorgenannten Ansprüche 3 bis 6, mit wenigstens einem zum Vorhalten von Betriebs- und/oder Verteilmaterialien vorgesehenen Vorratsmodul (20), wobei die Betriebs- und/oder Verteilmaterialien zum Betreiben wenigstens einer Maschinenkombination (50A, 50B) und/oder zum Aufbringen auf eine landwirtschaftliche Nutzfläche vorgesehen sind.

8. Landwirtschaftliches Transport- und/oder Bearbeitungssystem (100) nach Anspruch 7, **gekennzeichnet durch** eine Kopplungsvorrichtung (16), mittels welcher das Vorratsmodul (20) in austauschbarer Weise, insbesondere nach Art einer Wechselbrücke bzw. eines Wechselbehälters, an der Transporteinrichtung (10) anbringbar ist.

9. Landwirtschaftliches Transport- und/oder Bearbeitungssystem (100) nach Anspruch 8, **gekennzeichnet durch** ein höhenverstellbares Fahrwerk (15), welches dazu eingerichtet ist, eine, insbesondere heckseitige, Höhe und/oder Lage der Transporteinrichtung (10) zu beeinflussen, und mittels dem das Vorratsmodul (20), insbesondere nach Art einer Wechselbrücke, von der Transporteinrichtung (10) in eine dafür vorgesehene, insbesondere externe, Aufnahme- und/oder Abstellvorrichtung abstellbar ist.

10. Landwirtschaftliches Transport- und/oder Bearbeitungssystem (100) nach zumindest einem der vorgenannten Ansprüche 3 bis 8, **gekennzeichnet durch** ein höhenverstellbares Fahrwerk (15), welches dazu eingerichtet ist, eine Neigung und/oder Höhe der Transporteinrichtung (10) zum Be- und/oder Entladen der Maschinenkombinationen (50A, 50B) in Abhängigkeit der Topografie einer Abstellfläche im Bereich der Transporteinrichtung (10) anzupassen.

11. Landwirtschaftliches Transport- und/oder Bearbeitungssystem (100) nach zumindest einem der vorgenannten Ansprüche 7 bis 10, **dadurch gekennzeichnet, dass** die Abstell- und/oder Trageplattform (12) zumindest teilweise nach Art einer Sammel- und/oder Auffangvorrichtung zum Auffangen von Betriebs- und/oder Verteilmaterialien ausgebildet ist.

12. Landwirtschaftliches Transport- und/oder Bearbeitungssystem (100) nach zumindest einem der vorgenannten Ansprüche 3 bis 11, **gekennzeichnet durch** eine an einer Stirnseite der Transporteinrichtung (10) angeordnete verstellbare und/oder abnehmbare, insbesondere nach Art einer Deichsel ausgebildete, Zugvorrichtung (11), mittels der die Transporteinrichtung (10) mit einem Schlepper (1) koppelbar ist, wobei die Zugvorrichtung (11) derart verstellbar und/oder abnehmbar ist, dass die Abstell- und/oder Trageplattform (12) über die Stirnseite, und insbesondere oberhalb der Zugvorrichtung (11), von den Maschinenkombinationen (50A, 50B) befahrbar ist.

13. Landwirtschaftliches Transport- und/oder Bearbeitungssystem (100) nach zumindest einem der vorgenannten Ansprüche 3 bis 12, **gekennzeichnet durch** ein, insbesondere nach Art eines Energiespeichers ausgebildetes, Versorgungsmodul (24), welches an der Transporteinrichtung (10), vorzugsweise unterhalb des Vorratsmoduls (20), angeordnet ist, und welches dazu eingerichtet ist, die Transporteinrichtung (10) und/oder wenigstens eine Maschinenkombination (50A, 50B) mit elektrischer, hydraulischer und/oder mechanischer Energie zu versorgen und/oder zu betreiben.

14. Landwirtschaftliches Transport- und/oder Bearbeitungssystem (100) nach Anspruch 13, **gekennzeichnet durch** eine an der Transporteinrichtung (10), insbesondere am Vorrats- und/oder Versorgungsmodul (24), angeordnete erste Schnittstelle, welche in elektrisch leitender Weise mit einer an wenigstens einer Maschinenkombination (50A, 50B) angeordneten zweiten Schnittstelle verbindbar ist, wobei das Versorgungsmodul (24) über die Schnittstellen wiederaufladbar ist.

15. Landwirtschaftliches Transport- und/oder Bearbeitungssystem (100) nach zumindest einem der vorgenannten Ansprüche 7 bis 14, **gekennzeichnet durch** eine Erfassungs- und/oder Auswertevorrichtung, welche dazu eingerichtet ist, eine auf der Abstell- und/oder Trageplattform (12) abstellbare Maschinenkombination (50A, 50B) in einer dafür vorgesehenen Soll-Abstellposition zu erfassen und/oder zu ermitteln, und ein der Transporteinrichtung (10) zugeordnetes Steuer- und/oder Regelsystem, welches dazu eingerichtet ist, das Vorratsmodul (20) und/oder das Versorgungsmodul (24) in Abhängigkeit der erfassten und/oder ermittelten Maschinenkombination (50A, 50B) anzusteuern.

16. Landwirtschaftliches Transport- und/oder Bearbeitungssystem (100) nach Anspruch 15, **gekennzeichnet durch** einen der Erfassungs- und/oder Auswertevorrichtung zugeordneten ersten Positions- und/oder Lagegeber, mittels dem die Erfassungs- und/oder Auswertevorrichtung dazu eingerichtet ist, eine Position und/oder Lage der Transporteinrichtung (10), insbesondere der Soll-Abstellposition, in georeferenzierter Weise zu bestimmen, wobei das Steuer- und/oder Regelsystem dazu eingerichtet ist, die Position und/oder Lage der Transporteinrichtung (10), insbesondere die georeferenzierte Soll-Abstellposition, mit einer Position und/oder Lage, insbesondere einer georeferenzierten Ist-Position, der Maschinenkombination (50A, 50B), welche mittels einem der Maschinenkombination (50A, 50B) zugeordneten zweiten Positions- und/oder Lagegeber bestimmbar ist, abzugleichen.

17. Landwirtschaftliches Transport- und/oder Bearbeitungssystem (100) nach zumindest einem der vorgenannten Ansprüche 15 und/oder 16, **gekennzeichnet durch** ein dem Vorratsmodul (20) zugeordnetes Förderorgan (23), welches zum Befüllen der abstellbaren Maschinenkombination (50A, 50B) vorgesehen ist, und welches in Abhängigkeit der erfassten und/oder ermittelten Maschinenkombination (50A, 50B) einstellbar und/oder anpassbar ist.

18. Landwirtschaftliches Transport- und/oder Bearbeitungssystem (100) nach Anspruch 1, **dadurch gekennzeichnet, dass** das Zug- und/oder Trägerfahrzeug (51) derart ausgebildet und/oder absenkbar ist, dass die Maschinenkombination (50A, 50B) ineinander passend mit einer anderen, insbesondere zweiten, Maschinenkombination (50A, 50B), vorzugsweise von der anderen oder zweiten Maschinenkombination (50A, 50B) überragend, abstellbar ist.

19. Landwirtschaftliches Transport- und/oder Bearbeitungssystem (100) nach zumindest einem der vorgenannten Ansprüche 1 und/oder 18, **dadurch gekennzeichnet, dass** die Maschinenkombination (50A, 50B), insbesondere das Zug- und/oder Trägerfahrzeug (51), zum Verstellen in die Transportstellung längenveränderlich ausgebildet ist.

20. Landwirtschaftliches Transport- und/oder Bearbeitungssystem (100) nach Anspruch 19, **dadurch gekennzeichnet, dass** das Zug- und/oder Trägerfahrzeug (51) wenigstens einen vorderen und hinteren Fahrzeugteil (510, 511) aufweist, welche vorzugsweise horizontal schwenkbar und/oder besonders bevorzugt mittels eines Knickgelenks (55) miteinander verbunden sind, und welche zum Ändern einer Länge der Maschinenkombination (50A, 50B), insbesondere des Zug- und/oder Trägerfahrzeugs (51), translatorisch und/oder in Fahrtrichtung (F) zueinander verschiebbar sind.

21. Landwirtschaftliches Transport- und/oder Bearbeitungssystem (100) nach zumindest einem der vorgenannten Ansprüche 19 und/oder 20, wobei der Maschinenkombination (50A, 50B), insbesondere dem Zug- und/oder Trägerfahrzeug (51), wenigstens ein Steuer- und/oder Regelsystem zugeordnet ist, **gekennzeichnet durch** wenigstens einen, insbesondere zwischen dem vorderen und hinteren Fahrzeugteil (510, 511) angeordneten, Verstellantrieb (5500), welcher dazu eingerichtet ist, die Länge der Maschinenkombination (50A, 50B), insbesondere des Zug- und/oder Trägerfahrzeugs (51), zu verstellen, und welcher zum Verstellen der Maschinenkombination (50A, 50B) in die Transportstellung von dem Steuer- und/oder Regelsystem betätigbar ist.

22. Landwirtschaftliches Transport- und/oder Bearbeitungssystem (100) nach zumindest einem der vorgenannten Ansprüche 1 und/oder 18 bis 21, **dadurch gekennzeichnet, dass** die Maschinenkombination (50A, 50B) nach Art eines autonom bzw. unbemannt betreibbaren Maschinengespanns ausgebildet ist.

## Claims

1. Agricultural transport and/or processing system (100), comprising
- a transport unit (10) for receiving a machine combination (50A, 50B) consisting of an agricultural work machine (52) and a towing and/or carrier vehicle (51), the transport unit having a parking and/or carrying platform (12) on which a machine combination (50A, 50B) intended for transport can be parked; and
- one or more, in particular autonomously operable, machine combinations (50A, 50B) which are designed in the form of an agricultural machine grouping consisting of an agricultural work machine (52) and a towing and/or carrier vehicle (51);
**characterized in that** the work machine (52) can be adjusted at least partially from a parked, in particular lowered, starting position into a transport position positioned, in particular raised, relative to the towing and/or carrier vehicle (51), a lifting unit (57) which is designed to at least partially raise the work machine (52) being provided.

2. Agricultural transport and/or processing system (100) according to claim 1, **characterized by** at least one terminal device which is configured to determine and/or specify at least one suitable, in particular georeferenced, parking position for the transport unit (10) during the processing operation on the basis of information regarding the productive land to be processed, the machine combinations (50A, 50B) and/or the transport unit (10).

3. Agricultural transport and/or processing system (100) according to at least one of the preceding claims 1 or 2, **characterized by** a holding apparatus (14A, 14B) by means of which the at least one machine combination (50A, 50B) which can be parked on the parking and/or carrying platform (12) can be adjusted at least partially from a parked starting position into a transport position positioned relative to the parking and/or carrying platform (12) in such a way that a plurality of machine combinations (50A, 50B) can be parked on the transport unit (10) in a way that they fit inside one other, in particular project over one other.

4. Agricultural transport and/or processing system (100) according to claim 3, **characterized in that** the holding apparatus (14A, 14B) is configured, by means of at least one associated actuator (140A, 140B), to raise at least one of the machine combinations (50A, 50B) which can be parked on the parking and/or carrying platform (12) at least partially from the parked, in particular approximately horizontally pointing, starting position into the at least partially raised, in particular approximately vertically and/or obliquely upwardly pointing, transport position.

5. Agricultural transport and/or processing system (100) according to claim 4, **characterized in that** the transport unit (10) comprises a plurality of holding apparatuses (14A, 14B), each of the machine combinations (50A, 50B) which can be parked on the transport unit (10) being associated with at least one holding apparatus (14A, 14B), and it being possible for each of the plurality of parkable machine combinations (50A, 50B) to be adjusted, in particular raised, by means of the holding apparatuses (14A, 14B).

6. Agricultural transport and/or processing system (100) according to at least one of the preceding claims 3 to 5, **characterized in that** the holding apparatus (14A, 14B) can be form-fittingly and/or frictionally connected to at least one of the parkable machine combinations (50A, 50B), in particular to a frame associated with the towing and/or carrier vehicle (51).

7. Agricultural transport and/or processing system (100) according to at least one of the preceding claims 3 to 6, comprising at least one storage module (20) provided for holding operating and/or distribution materials, wherein the operating and/or distribution materials are provided for operating at least one machine combination (50A, 50B) and/or for being applied to a agriculturally productive land.

8. Agricultural transport and/or processing system (100) according to claim 7, **characterized by** a coupling apparatus (16) by means of which the storage module (20) can be attached to the transport unit (10) in an interchangeable manner, in particular in the manner of a swap body or a swap container.

9. Agricultural transport and/or processing system (100) according to claim 8, **characterized by** a height-adjustable chassis (15) which is designed to influence the height and/or location of the transport unit (10), in particular at the rear, and by means of which the storage module (20), in particular in the form of a swap body, can be moved from the transport unit (10) into a designated, in particular external, receiving and/or parking apparatus.

10. Agricultural transport and/or processing system (100) according to at least one of the preceding claims 3 to 8, **characterized by** a height-adjustable chassis (15) which is designed to adjust the inclination and/or height of the transport unit (10) for loading and/or unloading the machine combinations (50A, 50B) on the basis of the topography of a parking area in the region of the transport unit (10).

11. Agricultural transport and/or processing system (100) according to at least one of the preceding claims 7 to 10, **characterized in that** the parking and/or carrying platform (12) is at least partially designed in the form of a collecting and/or receiving apparatus for receiving operating and/or distribution materials.

12. Agricultural transport and/or processing system (100) according to at least one of the preceding claims 3 to 11, **characterized by** an adjustable and/or removable towing apparatus (11), in particular in the form of a drawbar, which is arranged on a front end of the transport unit (10) and by means of which the transport unit (10) can be coupled with a tractor (1), the towing apparatus (11) being adjustable and/or removable such that the parking and/or carrying platform (12) can be accessed by the machine combinations (50A, 50B) via the front end, and in particular above the towing apparatus (11).

13. Agricultural transport and/or processing system (100) according to at least one of the preceding claims 3 to 12, **characterized by** a supply module (24), in particular in the form of an energy storage means, which is arranged on the transport unit (10), preferably below the storage module (20), and is designed to supply and/or operate the transport unit (10) and/or at least one machine combination (50A, 50B) with electrical, hydraulic and/or mechanical energy.

14. Agricultural transport and/or processing system (100) according to claim 13, **characterized by** a first interface which is arranged on the transport unit (10), in particular on the storage and/or supply module (24), and can be connected in an electrically conductive manner to a second interface which is arranged on at least one machine combination (50A, 50B), the supply module (24) being rechargeable via the interfaces.

15. Agricultural transport and/or processing system (100) according to at least one of the preceding claims 7 to 14, **characterized by** a detection and/or evaluation apparatus which is configured to detect and/or ascertain a machine combination (50A, 50B) which can be parked on the parking and/or carrying platform (12) in a designated target parking position, and an open-loop and/or closed-loop control system which is associated with the transport unit (10) and is configured to control the storage module (20) and/or the supply module (24) on the basis of the detected and/or ascertained machine combination (50A, 50B).

16. Agricultural transport and/or processing system (100) according to claim 15, **characterized by** a first position and/or location transmitter which is associated with the detection and/or evaluation apparatus and by means of which the detection and/or evaluation apparatus is configured to determine a position and/or location of the transport unit (10), in particular the target parking position, in a georeferenced manner, the open-loop and/or closed-loop control system being configured to compare the position and/or location of the transport unit (10), in particular the georeferenced target parking position, with a position and/or location, in particular a georeferenced actual position, of the machine combination (50A, 50B), which can be determined by means of a second position and/or location transmitter which is associated with the machine combination (50A, 50B).

17. Agricultural transport and/or processing system (100) according to at least one of the preceding claims 15 and/or 16, **characterized by** a conveying element (23) which is associated with the storage module (20), is intended for filling the parkable machine combination (50A, 50B), and can be set and/or adapted on the basis of the detected and/or ascertained machine combination (50A, 50B).

18. Agricultural transport and/or processing system (100) according to claim 1, **characterized in that** the towing and/or carrier vehicle (51) is designed and/or can be lowered in such a way that the machine combination (50A, 50B) can be parked in a way that fits inside another, in particular second, machine combination (50A, 50B), preferably projects above the other or second machine combination (50A, 50B).

19. Agricultural transport and/or processing system (100) according to at least one of the preceding claims 1 and/or 18, **characterized in that** the machine combination (50A, 50B), in particular the towing and/or carrier vehicle (51), is designed to be variable in length for adjustment into the transport position.

20. Agricultural transport and/or processing system (100) according to claim 19, **characterized in that** the towing and/or carrier vehicle (51) has at least one front and rear vehicle part (510, 511) which are preferably horizontally pivotable and/or particularly preferably connected to one other by means of an articulated joint (55) and are movable relative to one another translationally and/or in the direction of travel (F) in order to change a length of the machine combination (50A, 50B), in particular of the towing and/or carrier vehicle (51).

21. Agricultural transport and/or processing system (100) according to at least one of the preceding claims 19 and/or 20, at least one open-loop and/or closed-loop control system being associated with the machine combination (50A, 50B), in particular the towing and/or carrier vehicle (51), **characterized by** at least one adjusting drive (5500) which in particular is arranged between the front and rear vehicle part (510, 511), is designed to adjust the length of the machine combination (50A, 50B), in particular of the towing and/or carrier vehicle (51), and can be actuated by the open-loop and/or closed-loop control system to adjust the machine combination (50A, 50B) into the transport position.

22. Agricultural transport and/or processing system (100) according to at least one of the preceding claims 1 and/or 18 to 21, **characterized in that** the machine combination (50A, 50B) is designed in the form of a machine set which can be operated autonomously or unmanned.

## Revendications

1. Système de transport et/ou de traitement agricole (100), comportant
- un appareil de transport (10) destiné à recevoir une combinaison de machines (50A, 50B) composée d'une machine de travail (52) agricole et d'un véhicule tracteur et/ou porteur (51), comportant une plateforme de stationnement et/ou de support (12) sur laquelle une combinaison de machines (50A, 50B) prévue pour le transport peut être stationnée ; et
- une ou plusieurs combinaisons de machines (50A, 50B), en particulier pouvant être exploitées de manière autonome, lesquelles sont réalisées à la manière d'un attelage de machines agricoles, constitué d'une machine de travail (52) agricole et d'un véhicule tracteur et/ou porteur (51) ;
**caractérisé en ce que** la machine de travail (52) peut être déplacée au moins partiellement d'une position de départ en stationnement, en particulier abaissée, à une position de transport inclinée, en particulier relevée, par rapport au véhicule tracteur et/ou porteur (51), dans lequel un appareil de levage (57) est prévu, lequel est conçu pour soulever au moins partiellement la machine de travail (52).

2. Système de transport et/ou de traitement agricole (100) selon la revendication 1, **caractérisé par** au moins un terminal qui est conçu pour établir et/ou prédéfinir au moins une position de stationnement appropriée, en particulier géoréférencée, pour l'appareil de transport (10) pendant le processus de traitement, sur la base d'informations de la surface utile à traiter, des combinaisons de machines (50A, 50B) et/ou de l'appareil de transport (10).

3. Système de transport et/ou de traitement agricole (100) selon au moins l'une des revendications 1 ou 2 précédentes, **caractérisé par** un dispositif de retenue (14A, 14B) par le biais duquel l'au moins une combinaison de machines (50A, 50B) pouvant être stationnée sur la plateforme de stationnement et/ou de support (12) peut être déplacée au moins partiellement d'une position de départ en stationnement à une position de transport inclinée par rapport à la plateforme de stationnement et/ou de support (12) de telle sorte que plusieurs combinaisons de machines (50A, 50B) peuvent être stationnées sur l'appareil de transport (10) en s'emboîtant les unes dans les autres, en particulier empilées les unes sur les autres.

4. Système de transport et/ou de traitement agricole (100) selon la revendication 3, **caractérisé en ce que** le dispositif de retenue (14A, 14B) est conçu pour soulever, par le biais d'au moins un servomoteur (140A, 140B) associé, au moins partiellement au moins l'une des combinaisons de machines (50A, 50B) pouvant être stationnées sur la plateforme de stationnement et/ou de support (12), depuis la position de départ en stationnement, en particulier orientée à peu près horizontalement, vers la position de transport au moins partiellement soulevée, en particulier orientée à peu près verticalement et/ou obliquement vers le haut.

5. Système de transport et/ou de traitement agricole (100) selon la revendication 4, **caractérisé en ce que** l'appareil de transport (10) comprend plusieurs dispositifs de retenue (14A, 14B), dans lequel respectivement au moins un dispositif de retenue (14A, 14B) est associé à chacune des combinaisons de machines (50A, 50B) pouvant être stationnées sur l'appareil de transport (10), et dans lequel chacune des plusieurs combinaisons de machines (50A, 50B) pouvant être stationnées peut être déplacée, en particulier soulevée, par le biais des dispositifs de retenue (14A, 14B).

6. Système de transport et/ou de traitement agricole (100) selon au moins l'une des revendications 3 à 5 précédentes, **caractérisé en ce que** le dispositif de retenue (14A, 14B) peut être relié par complémentarité de forme et/ou à force à au moins l'une des combinaisons de machines (50A, 50B) pouvant être stationnées, en particulier à un châssis associé au véhicule tracteur et/ou porteur (51).

7. Système de transport et/ou de traitement agricole (100) selon au moins l'une des revendications 3 à 6 précédentes, comportant au moins un module de stockage (20) prévu pour stocker des matériaux d'exploitation et/ou de distribution, dans lequel les matériaux d'exploitation et/ou de distribution sont prévus pour exploiter au moins une combinaison de machines (50A, 50B) et/ou pour être appliqués sur une surface agricole utile.

8. Système de transport et/ou de traitement agricole (100) selon la revendication 7, **caractérisé par** un dispositif d'accouplement (16) par le biais duquel le module de stockage (20) peut être monté de manière interchangeable, en particulier à la manière d'un pont interchangeable ou d'un conteneur interchangeable, sur l'appareil de transport (10).

9. Système de transport et/ou de traitement agricole (100) selon la revendication 8, **caractérisé par** un train de roulement (15) réglable en hauteur, lequel est conçu pour influencer une hauteur et/ou une position, en particulier arrière, de l'appareil de transport (10), et par le biais duquel le module de stockage (20) peut être stationné, en particulier à la manière d'un pont interchangeable, par l'appareil de transport (10) dans un dispositif de réception et/ou de stationnement prévu à cet effet, en particulier externe.

10. Système de transport et/ou de traitement agricole (100) selon au moins l'une des revendications 3 à 8 précédentes, **caractérisé par** un train de roulement (15) réglable en hauteur, lequel est conçu pour ajuster une inclinaison et/ou une hauteur de l'appareil de transport (10) pour le chargement et/ou le déchargement des combinaisons de machines (50A, 50B) en fonction de la topographie d'une surface de stationnement dans la zone de l'appareil de transport (10).

11. Système de transport et/ou de traitement agricole (100) selon au moins l'une des revendications 7 à 10 précédentes, **caractérisé en ce que** la plateforme de stationnement et/ou de support (12) est réalisée au moins en partie à la manière d'un dispositif de collecte et/ou de réception pour recueillir des matériaux d'exploitation et/ou de distribution.

12. Système de transport et/ou de traitement agricole (100) selon au moins l'une des revendications 3 à 11 précédentes, **caractérisé par** un dispositif de traction (11) déplaçable et/ou démontable, en particulier réalisé à la manière d'un timon et agencé sur une face frontale de l'appareil de transport (10), dispositif de traction par le biais duquel l'appareil de transport (10) peut être accouplé à un remorqueur (1), dans lequel le dispositif de traction (11) peut être déplacé et/ou démonté de telle sorte que la plateforme de stationnement et/ou de support (12) peut être parcourue par les combinaisons de machines (50A, 50B) par l'intermédiaire de la face frontale, et en particulier au-dessus du dispositif de traction (11).

13. Système de transport et/ou de traitement agricole (100) selon au moins l'une des revendications 3 à 12 précédentes, **caractérisé par** un module d'alimentation (24), réalisé en particulier à la manière d'un accumulateur d'énergie, lequel module d'alimentation est agencé sur l'appareil de transport (10), de préférence en dessous du module de stockage (20), et lequel est conçu pour alimenter en énergie électrique, hydraulique et/ou mécanique l'appareil de transport (10) et/ou au moins une combinaison de machines (50A, 50B) et/ou pour exploiter celui-ci/celle-ci.

14. Système de transport et/ou de traitement agricole (100) selon la revendication 13, **caractérisé par** une première interface agencée sur l'appareil de transport (10), en particulier sur le module de stockage et/ou d'alimentation (24), laquelle première interface peut être connectée de manière électriquement conductrice à une seconde interface agencée sur au moins une combinaison de machines (50A, 50B), dans lequel le module d'alimentation (24) peut être rechargé par l'intermédiaire des interfaces.

15. Système de transport et/ou de traitement agricole (100) selon au moins l'une des revendications 7 à 14 précédentes, **caractérisé par** un dispositif de détection et/ou d'évaluation qui est conçu pour détecter et/ou déterminer, dans une position de stationnement de consigne prévue à cet effet, une combinaison de machines (50A, 50B) pouvant être stationnée sur la plateforme de stationnement et/ou de support (12), et un système de commande et/ou de régulation associé à l'appareil de transport (10), lequel système de commande et/ou de régulation est conçu pour commander le module de stockage (20) et/ou le module d'alimentation (24) en fonction de la combinaison de machines (50A, 50B) détectée et/ou déterminée.

16. Système de transport et/ou de traitement agricole (100) selon la revendication 15, **caractérisé par** un premier capteur de position et/ou de posture associé au dispositif de détection et/ou d'évaluation par le biais duquel le dispositif de détection et/ou d'évaluation est conçu pour établir, de manière géoréférencée, une position et/ou une posture de l'appareil de transport (10), en particulier la position de stationnement de consigne, dans lequel le système de commande et/ou de régulation est conçu pour comparer la position et/ou la posture de l'appareil de transport (10), en particulier la position de stationnement de consigne géoréférencée, à une position et/ou une posture, en particulier une position réelle géoréférencée, de la combinaison de machines (50A, 50B), laquelle position réelle géoréférencée peut être établie par le biais d'un second capteur de position et/ou de posture associé à la combinaison de machines (50A, 50B).

17. Système de transport et/ou de traitement agricole (100) selon au moins l'une des revendications 15 et/ou 16 précédentes, **caractérisé par** un organe de transport (23) associé au module de stockage (20), lequel organe de transport est prévu pour le remplissage de la combinaison de machines (50A, 50B) pouvant être stationnée, et est réglable et/ou ajustable en fonction de la combinaison de machines (50A, 50B) détectée et/ou déterminée.

18. Système de transport et/ou de traitement agricole (100) selon la revendication 1, **caractérisé en ce que** le véhicule tracteur et/ou porteur (51) est réalisé et/ou peut être abaissé de telle sorte que la combinaison de machines (50A, 50B) peut être stationnée en s'emboîtant avec une autre combinaison de machines (50A, 50B), en particulier une seconde combinaison de machines, de préférence en s'empilant sur l'autre ou seconde combinaison de machines (50A, 50B).

19. Système de transport et/ou de traitement agricole (100) selon au moins l'une des revendications 1 et/ou 18 précédentes, **caractérisé en ce que** la combinaison de machines (50A, 50B), en particulier le véhicule tracteur et/ou porteur (51), est réalisée de manière à être variable en longueur pour le déplacement vers la position de transport.

20. Système de transport et/ou de traitement agricole (100) selon la revendication 19, **caractérisé en ce que** le véhicule tracteur et/ou porteur (51) présente au moins une partie de véhicule avant et une partie de véhicule arrière (510, 511), lesquelles peuvent pivoter de préférence horizontalement et/ou sont reliées entre elles de manière particulièrement préférée par le biais d'une articulation (55), et lesquelles peuvent coulisser en translation et/ou dans le sens de la marche (F) l'une par rapport à l'autre pour faire varier une longueur de la combinaison de machines (50A, 50B), en particulier du véhicule tracteur et/ou porteur (51).

21. Système de transport et/ou de traitement agricole (100) selon au moins l'une des revendications 19 et/ou 20 précédentes, dans lequel au moins un système de commande et/ou de régulation est associé à la combinaison de machines (50A, 50B), en particulier au véhicule tracteur et/ou porteur (51), **caractérisé par** au moins un entraînement de déplacement (5500), en particulier agencé entre la partie avant et la partie arrière de véhicule (510, 511), lequel entraînement de déplacement est conçu pour régler la longueur de la combinaison de machines (50A, 50B), en particulier du véhicule tracteur et/ou porteur (51), et peut être exploité par le système de commande et/ou de régulation pour le déplacement de la combinaison de machines (50A, 50B) vers la position de transport.

22. Système de transport et/ou de traitement agricole (100) selon au moins l'une des revendications 1 et/ou 18 à 21 précédentes, **caractérisé en ce que** la combinaison de machines (50A, 50B) est réalisée à la manière d'un attelage de machines pouvant être exploité de manière autonome ou sans équipage.
